# EUROPEAN PATENT APPLICATION

(11) **EP 4 195 549 A1**
(43) Date of publication of application: **14.06.2023**
(21) Application number: 20948244.7
(22) Date of filing: 06.08.2020
(51) Int. Cl.: H04L 1/16, H04W 72/12, H04L 1/1829

(54) **SEMI-PERSISTENT SCHEDULE FEEDBACK METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN); LIN, Yanan, Dongguan, Guangdong 523860 (CN)
(74) Representative: Novagraaf Technologies
(86) International application number: PCT/CN2020/107570
(87) International publication number: WO 2022/027516

(57) **Abstract**

Disclosed are a semi-persistent schedule feedback method and apparatus, and a device and a storage medium, which relate to the field of wireless communications. The method comprises: a terminal device receiving at least one semi-persistent schedule (SPS) activation instruction sent by a network device, wherein the SPS activation instruction is used for activating at least one SPS configuration among one or more SPS configurations configured for the terminal device, and each SPS configuration among the one or more SPS configurations corresponds to a hybrid automatic repeat request-acknowledgement (HARQ-ACK) packet; and the terminal device receiving data on an SPS PDSCH corresponding to the at least one SPS configuration, and feeding back a HARQ-ACK to the network device according to the HARQ-ACK packet corresponding to the at least one SPS configuration. By means of the method, the feedback of redundant and invalid HARQ-ACKs can be prevented, the reliability and efficiency of uplink transmission are improved, and the power consumption of a terminal device is reduced.

## Description

### TECHNICAL FIELD

The present application relates to the field of wireless communication, and in particular, to a feedback method, apparatus, device and storage medium for semi-persistent scheduling.

### BACKGROUND

New Radio (NR) system supports multiple Semi-Persistent Schedule configurations (SPS configurations), Semi-Persistent Schedule Physical Downlink Shared Channel (SPS PDSCH) of each SPS configuration needs to feed back Hybrid Automatic Repeat request-Acknowledge character (HARQ-ACK).

However, the network device configured with multiple SPS configurations does not necessarily send data on all SPS PDSCHs of all SPS configurations. In the related art, in order to adapt to the fluctuation of data arrival, the network device often configures multiple SPS configurations to adapt to data arriving at any time. In fact, in a sending period of one downlink data, only SPS PDSCH of one SPS configuration in the multiple SPS configurations will carry data. That is to say, in the sending period of the downlink data, only one SPS PDSCH needs to feed back HARQ-ACK, and the HARQ-ACK of other SPS PDSCH has no meaning to the network device.

The method in the related art will feed back redundant and invalid HARQ-ACK.

### SUMMARY

The embodiments of the present application provide a feedback method, apparatus, device, and storage medium for semi-persistent scheduling, which can avoid feedback of redundant and invalid HARQ-ACK, and improve uplink transmission efficiency. The technical solutions are as follows.

According to an aspect of the present application, a feedback method for semi-persistent scheduling is provided, the method including:
receiving, by a terminal device, at least one semi-persistent scheduling (SPS) activation instruction sent by a network device, where the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
receiving data on an SPS PDSCH corresponding to the at least one SPS configuration, and feeding back an HARQ-ACK to the network device according to the HARQ-ACK group corresponding to the at least one SPS configuration, by the terminal device.

According to an aspect of the present application, a feedback method for semi-persistent scheduling is provided, the method including:
sending, by a network device, at least one semi-persistent scheduling (SPS) activation instruction to a terminal device, where the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
sending, by the network device, data to the terminal device on an SPS PDSCH corresponding to the at least one SPS configuration;
receiving, by the network device, an HARQ-ACK fed back by the terminal device, where the HARQ-ACK is fed back by the terminal device according to the HARQ-ACK group corresponding to the at least one SPS configuration.

According to an aspect of the present application, a feedback apparatus for semi-persistent scheduling is provided, the apparatus including:
a first receiving module, configured to receive at least one semi-persistent scheduling (SPS) activation instruction sent by a network device, where the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
the first receiving module being further configured to receive data on an SPS PDSCH corresponding to the at least one SPS configuration;
a feedback module, configured to feed back an HARQ-ACK to the network device according to the HARQ-ACK group corresponding to the at least one SPS configuration.

According to an aspect of the present application, a feedback apparatus for semi-persistent scheduling is provided, the apparatus including:
a sending module, configured to send at least one semi-persistent scheduling (SPS) activation instruction to a terminal device, where the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
the sending module being further configured to send data to the terminal device on an SPS PDSCH corresponding to the at least one SPS configuration;
a second receiving module, further configured to receive an HARQ-ACK fed back by the terminal device, where the HARQ-ACK is fed back by the terminal device according to the HARQ-ACK group corresponding to the at least one SPS configuration.

According to an aspect of the present application, a terminal device is provided, the terminal device including: a processor; a transceiver connected to the processor; and a memory for storing executable instructions of the processor; where the processor is configured to load and execute the executable instructions to implement the feedback method for semi-persistent scheduling implemented by the terminal device as described in the above aspects.

According to one aspect of the present application, a network device is provided, the network device including: a processor; a transceiver connected to the processor; and a memory for storing executable instructions of the processor; where the processor is configured to load and execute the executable instructions to implement the feedback method for semi-persistent scheduling implemented by the network device as described in the above aspects.

According to one aspect of the present application, there is provided a computer-readable storage medium storing executable instructions, the executable instructions being loaded and executed by a processor to implement the feedback method for semi-persistent scheduling as described in the above aspects.

According to one aspect of the present application, there is provided a computer program product or computer program, the computer program product or computer program includes computer instructions, and the computer instructions are stored in a computer-readable storage medium. The processor of the computer device reads the computer instructions from the computer-readable storage medium, and the processor executes the computer instructions, so that the computer device executes the above-mentioned optional feedback method for semi-persistent scheduling described in the above aspects.

According to one aspect of the present application, a chip is provided, the chip includes a programmable logic circuit and/or program instructions, and is configured to implement the feedback method for semi-persistent scheduling as described in the above aspects when the chip is running.

The technical solutions provided by the embodiments of the present application include at least the following beneficial effects.

By grouping at least one SPS configuration, and each SPS configuration corresponds to its own HARQ-ACK group, the terminal device feeds back HARQ-ACK to the network device according to the HARQ-ACK group, which simplifies the HARQ-ACK feedback manner of the terminal device, avoids feedback of the redundant and invalid HARQ-ACK, improves the reliability and efficiency of uplink transmission, and reduces the power consumption of the terminal device.

### BRIEF DESCRIPTION OF THE DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort.
FIG. 1 is a block diagram of a communication system provided by an exemplary embodiment of the present application;
FIG. 2 is a schematic diagram of a feedback method for semi-persistent scheduling provided by another exemplary embodiment of the present application;
FIG. 3 is a flowchart of a feedback method for semi-persistent scheduling provided by another exemplary embodiment of the present application;
FIG. 4 is a flowchart of a feedback method for semi-persistent scheduling provided by another exemplary embodiment of the present application;
FIG. 5 is a flowchart of a feedback method for semi-persistent scheduling provided by another exemplary embodiment of the present application;
FIG. 6 is a schematic diagram of a feedback method for semi-persistent scheduling provided by another exemplary embodiment of the present application;
FIG. 7 is a flowchart of a feedback method for semi-persistent scheduling provided by another exemplary embodiment of the present application;
FIG. 8 is a schematic diagram of a feedback method for semi-persistent scheduling provided by another exemplary embodiment of the present application;
FIG. 9 is a flowchart of a feedback method for semi-persistent scheduling provided by another exemplary embodiment of the present application;
FIG. 10 is a schematic diagram of a feedback method for semi-persistent scheduling provided by another exemplary embodiment of the present application;
FIG. 11 is a flowchart of a feedback method for semi-persistent scheduling provided by another exemplary embodiment of the present application;
FIG. 12 is a schematic diagram of a feedback method for semi-persistent scheduling provided by another exemplary embodiment of the present application;
FIG. 13 is a flowchart of a feedback method for semi-persistent scheduling provided by another exemplary embodiment of the present application;
FIG. 14 is a schematic diagram of a feedback method for semi-persistent scheduling provided by another exemplary embodiment of the present application;
FIG. 15 is a flowchart of a feedback method for semi-persistent scheduling provided by another exemplary embodiment of the present application;
FIG. 16 is a schematic diagram of a feedback method for semi-persistent scheduling provided by another exemplary embodiment of the present application;
FIG. 17 is a flowchart of a feedback method for semi-persistent scheduling provided by another exemplary embodiment of the present application;
FIG. 18 is a schematic diagram of a feedback method for semi-persistent scheduling provided by another exemplary embodiment of the present application;
FIG. 19 is a structural block diagram of a feedback apparatus for semi-persistent scheduling provided by another exemplary embodiment of the present application;
FIG. 20 is a structural block diagram of a feedback apparatus for semi-persistent scheduling provided by another exemplary embodiment of the present application;
FIG. 21 is a schematic structural diagram of a terminal device provided by another exemplary embodiment of the present application;
FIG. 22 is a schematic structural diagram of a network device provided by another exemplary embodiment of the present application.

### DETAILED DESCRIPTION

In order to make the objectives, technical solutions and advantages of the present application clearer, the embodiments of the present application will be further described in detail below with reference to the accompanying drawings.

First, the terms involved in the embodiments of the present application are briefly introduced:
**Hybrid Automatic Repeat Request** (HARQ): it is a technology that combines Forward Error Correction (FEC) and Automatic Repeat-reQuest (ARQ). At the receiving end, FEC technology is used to correct the part of all errors that can be corrected. Error data packets cannot be corrected by the error detection determination. The data packets that cannot be corrected are discarded, and the transmitter is requested to resend the same data packets.
**Semi-Persistent Schedule (SPS) configuration:** it is also known as semi-persistent scheduling, and different from allocating radio resources to User Equipment (UE) once in each transmission time interval (TTI, scheduling period) during dynamic scheduling (specified by Physical Uplink Control Channel (PDCCH)), SPS configuration allows semi-static configuration of the radio resources, and periodically allocates the resources to a specific UE. In brief, the Evolved Node B (eNodeB) specifies the SPS PDSCH used by the UE by using the PDCCH scrambled by Cell-Radio Network Temporary Identifier (SPSC-RNTI) at a certain TTI, and after each period, the UE receives or sends data by using the SPS PDSCH. The network device does not need to specify the allocated resources by issuing the PDCCH in this subframe (herein referred to as the SPS subframe). Since the SPS configuration has the characteristics of "once configuration, multiple uses", it is not necessary to issue Downlink Control Information (DCI) (including uplink or downlink DCI) to the UE at each TTI, thereby reducing the corresponding PDCCH overhead.

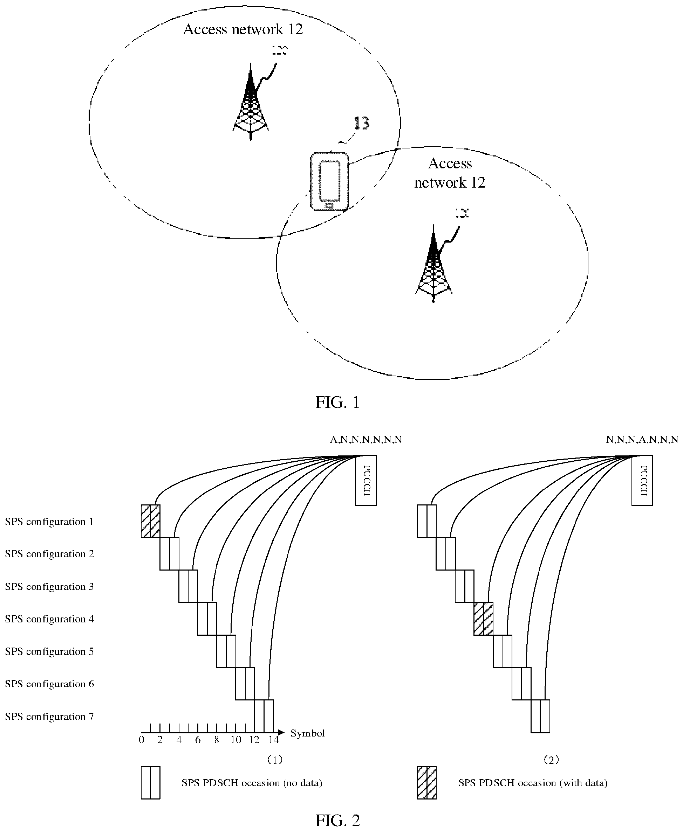

FIG. 1 shows a block diagram of a communication system provided by an exemplary embodiment of the present application. The communication system may include: an access network 12 and a terminal device 13.

The access network 12 includes several network devices 120. The network device 120 may be a base station, which is an apparatus deployed in an access network to provide a wireless communication function for the terminal device. The base station may include various forms of macro base station, micro base station, relay station, access point and so on. In systems using different radio access technologies, the names of devices with base station functions may be different. For example, in LTE systems, they are called eNodeBs or eNBs; in 5G NR-U systems, they are called gNodeBs or gNBs. As communication technology evolves, the description of "base station" may change. For the convenience of the embodiments of the present application, the above-mentioned apparatuses for providing a wireless communication function for the terminal device 13 are collectively referred to as network devices.

The terminal device 13 may include various handheld devices, vehicle-mounted devices, wearable devices, computing devices with wireless communication functions or other processing devices connected to wireless modems, as well as various forms of user equipment, Mobile Station (MSs), terminal devices, etc. For the convenience of description, the devices mentioned above are collectively referred to as terminal devices. The network device 120 and the terminal device 13 communicate with each other through a certain air interface technology, such as a Uu interface.

Optionally, the network device 120 transmits data through the SPS configuration, and the terminal device 13 performs HARQ-ACK feedback on the SPS PDSCH.

The technical solutions of the embodiments of the present application can be applied to various communication systems, such as: a Long Term Evolution (LTE) system, an LTE Frequency Division Duplex (FDD) system, an LTE Time Division Duplex (TDD) system, an Advanced Long Term Evolution (LTE-A) system, a New Radio (NR) system, an evolution system of NR system, an LTE-based access to Unlicensed spectrum (LTE-U) system, an NR-U system, Wireless Local Area Networks (WLAN), Wireless Fidelity (WiFi), next-generation communication system or other communication systems.

Generally speaking, traditional communication systems support a limited number of connections, which are easy to be implemented. However, with the development of communication technology, the mobile communication systems will not only support traditional communication, but also support, for example, Device to Device (D2D) communication, Machine to Machine (M2M) communication, Machine Type Communication (MTC), Vehicle to Vehicle (V2V) communication and Vehicle to Everything (V2X) system, etc. The embodiments of the present application can also be applied to these communication systems.

In the related art, the NR system supports multiple sets of SPS configurations. In order to adapt to the fluctuation of data arrival, the network device often configures at least one SPS configuration to adapt to the data arriving at any time. For SPS PDSCH of each SPS configuration, the UE needs to feed back HARQ-ACK. However, although the network device configures the UE with one or more SPS configurations, the network device does not necessarily send data on all SPS PDSCHs of all SPS configurations. As shown in FIG. 2, for a service with a sending period of 4 slots and a data arrival fluctuation range of 0-12 symbols, the network device configures 7 SPS configurations: SPS configuration 1, SPS configuration 2, SPS configuration 3, SPS configuration 4, SPS configuration 5, SPS configuration 6, and SPS configuration 7. The start symbols of the SPS PDSCH of the 7 SPS configurations are offset by 10, 2, 4, 6, 8, 10, 12} symbols respectively, and the period of each SPS configuration is 4 slots. Therefore, in fact, in the same period, the SPS PDSCH of only one SPS configuration in the 7 SPS configurations will carry data. For example, as shown in (1) in FIG. 2, the SPS PDSCH of SPS configuration 1 carries data, and the SPS PDSCHs of the remaining six SPS configurations do not carry data, then the UE may feed back HARQ-ACK: A,N,N,N,N,N,N(1,0,0,0,0,0,0); where A represents ACK, that is, the acknowledge character, which is used to indicate that the UE has received data on the SPS PDSCH of SPS configuration 1; N represents NACK, that is, the non-acknowledgement character, which is used to indicate that the UE has not received data in the SPS PDSCHs of SPS configuration 1 to SPS configuration 7. For another example, as shown in (2) in FIG. 2, the SPS PDSCH of SPS configuration 4 carries data, and the SPS PDSCHs of the remaining six SPS configurations do not carry data, then the UE may feed back HARQ-ACK: N,N,N,A,N,N,N(0,0,0,1,0,0,0). It can be seen that only one SPS PDSCH actually needs HARQ-ACK feedback, and the HARQ-ACK of other SPS PDSCHs is meaningless to the network device.

Therefore, the present application provides a feedback method for semi-persistent scheduling. In the case of at least one SPS configuration, HARQ-ACK feedback is performed on the SPS PDSCH corresponding to at least one SPS configuration according to the HARQ-ACK group to avoid redundant and invalid HARQ -ACK feedback, improve the reliability and efficiency of uplink transmission, and reduce the power consumption of the terminal device.

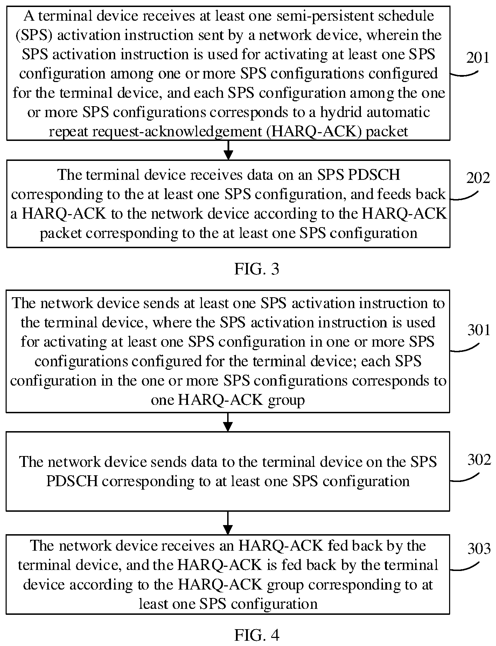

FIG. 3 shows a flowchart of a feedback method for semi-persistent scheduling provided by an exemplary embodiment of the present application. The method can be applied to the terminal device in the communication system shown in FIG. 1, and the method includes the following steps.

**In step 201:** the terminal device receives at least one semi-persistent scheduling (SPS) activation instruction sent by a network device, where the SPS activation instruction is used for activating at least one SPS configuration in one or more SPS configurations configured for the terminal device; and each of the one or more SPS configurations corresponds to one hybrid automatic repeat request-acknowledgement (HARQ-ACK) group.

Illustratively, the SPS activation instruction is carried in Downlink Control Information (DCI). Each SPS activation instruction is used for activating one SPS configuration. Alternatively, each SPS activation instruction is used for activating the SPS configuration information (SPS config) of one SPS configuration. However, the embodiment of the present application does not exclude the possibility that one SPS activation instruction is used for activating more than two SPS configurations.

The terminal device receives one or more SPS activation instructions, and activates one SPS configuration according to each SPS activation instruction, or, in other words, activates the configuration information of one SPS configuration.

The network device sends one or more pieces of SPS configuration information to the terminal device in advance, and each piece of SPS configuration information is used for configuring one SPS configuration. Each piece of SPS configuration information includes, but is not limited to, configuration parameters such as the period of the SPS configuration, the number of repetitions of the SPS configuration, and the resource position of the SPS configuration.

The configuration parameters carried in each piece of SPS configuration information also carry group information of the HARQ-ACK group, where the group information is used for indicating the HARQ-ACK group corresponding to the SPS configuration, and the group information may be a group identifier.

In the case where the terminal device is configured with multiple SPS configurations, the multiple SPS configurations may correspond to or belong to the same HARQ-ACK group, or may correspond to or belong to different HARQ-ACK groups.

For example, the terminal device is configured with 7 SPS configurations, and the 7 SPS configurations correspond to the same HARQ-ACK group; for another example, SPS configuration 1, SPS configuration 2, and SPS configuration 3 in the 7 SPS configurations correspond to the first HARQ-ACK group, and SPS configuration 4, SPS configuration 5, SPS configuration 6, and SPS configuration 7 correspond to the second HARQ-ACK group.

**In step 202:** the terminal device receives data on an SPS PDSCH corresponding to at least one SPS configuration, and feeds back HARQ-ACK to the network device according to the HARQ-ACK group corresponding to the at least one SPS configuration.

Illustratively, within the same data sending period, the network device only sends data on the SPS PDSCH corresponding to a certain SPS configuration in the at least one SPS configuration, and the data is downlink data. The SPS configuration corresponding to the SPS PDSCH carrying data is unknown to the terminal device, or unpredictable by the terminal device.

The terminal device receives data on the SPS PDSCH corresponding to at least one SPS configuration, and feeds back HARQ-ACK to the network device according to the HARQ-ACK group corresponding to the at least one SPS configuration.

Illustratively, when there is more than one SPS configuration corresponding to the same HARQ-ACK group, the HARQ-ACK is used for indicating the reception situation on the SPS PDSCH where valid data transmission has occurred.

To sum up, in the method provided in this embodiment, at least one SPS configuration is grouped, and each SPS configuration corresponds to its own HARQ-ACK group, so that the terminal device feeds back HARQ-ACK to the network device according to the HARQ-ACK group, which simplifies the HARQ-ACK feedback manner of the terminal device, avoids feedback of redundant and invalid HARQ-ACK, improves the reliability and efficiency of uplink transmission, and reduces the power consumption of the terminal device.

FIG. 4 shows a flowchart of a feedback method for semi-persistent scheduling provided by an exemplary embodiment of the present application. The method can be applied to a network device in the communication system shown in FIG. 1, and the method includes the following steps.

**In step 301:** the network device sends at least one SPS activation instruction to the terminal device, where the SPS activation instruction is used for activating at least one SPS configuration in one or more SPS configurations configured for the terminal device; and each SPS configuration in the one or more SPS configurations corresponds to one HARQ-ACK group.

The network device sends one or more SPS activation instructions. Each SPS activation instruction is used for activating one SPS configuration. Alternatively, each SPS activation instruction is used for activating SPS configuration information (SPS config) of one SPS configuration. However, the embodiment of the present application does not exclude the possibility that one SPS activation instruction is used for activating more than two SPS configurations.

Illustratively, the SPS activation instruction is carried in the DCI. The network device sends one or more DCIs, and each DCI carries one SPS activation instruction. Optionally, the DCI is carried in a Physical Downlink Control Channel (PDCCH).

The network device also sends one or more pieces of SPS configuration information to the terminal device in advance, and each piece of SPS configuration information is used for configuring one SPS configuration. Each piece of SPS configuration information includes, but is not limited to, configuration parameters such as the period of the SPS configuration, the number of repetitions of the SPS configuration, and the resource position of the SPS configuration.

The configuration parameters carried in each piece of SPS configuration information also carry group information of the HARQ-ACK group, where the group information is used for indicating the HARQ-ACK group corresponding to the SPS configuration, and the group information may be a group identifier.

In the case where the terminal device is configured with multiple SPS configurations, the multiple SPS configurations may correspond to or belong to the same HARQ-ACK group, or may correspond to or belong to different HARQ-ACK groups.

For example, the terminal device is configured with 7 SPS configurations, and the 7 SPS configurations correspond to the same HARQ-ACK group; for another example, SPS configuration 1, SPS configuration 2, and SPS configuration 3 in the 7 SPS configurations correspond to the first HARQ-ACK group, and SPS configuration 4, SPS configuration 5, SPS configuration 6, and SPS configuration 7 correspond to the second HARQ-ACK group.

**In step 302:** the network device sends data to the terminal device on the SPS PDSCH corresponding to at least one SPS configuration.

Since there is a certain jitter in the arrival of data, in the same data sending period, the network device only sends data on the SPS PDSCH corresponding to a certain SPS configuration among one or more SPS configurations, and the data is downlink data. The SPS configuration corresponding to the SPS PDSCH carrying data is unknown to the terminal device, or unpredictable by the terminal device.

**In step 303:** the network device receives an HARQ-ACK fed back by the terminal device, and the HARQ-ACK is fed back by the terminal device according to the HARQ-ACK group corresponding to at least one SPS configuration.

Illustratively, when there is more than one SPS configuration corresponding to the same HARQ-ACK group, the HARQ-ACK is used for indicating the reception situation on the SPS PDSCH where valid data transmission has occurred.

To sum up, in the method provided in this embodiment, at least one SPS configuration is grouped, and each SPS configuration corresponds to its own HARQ-ACK group, so that the terminal device feeds back HARQ-ACK to the network device according to the HARQ-ACK group, which simplifies the HARQ-ACK feedback manner of the terminal device, avoids feedback of redundant and invalid HARQ-ACK, improves the reliability and efficiency of uplink transmission, and reduces the power consumption of the terminal device.

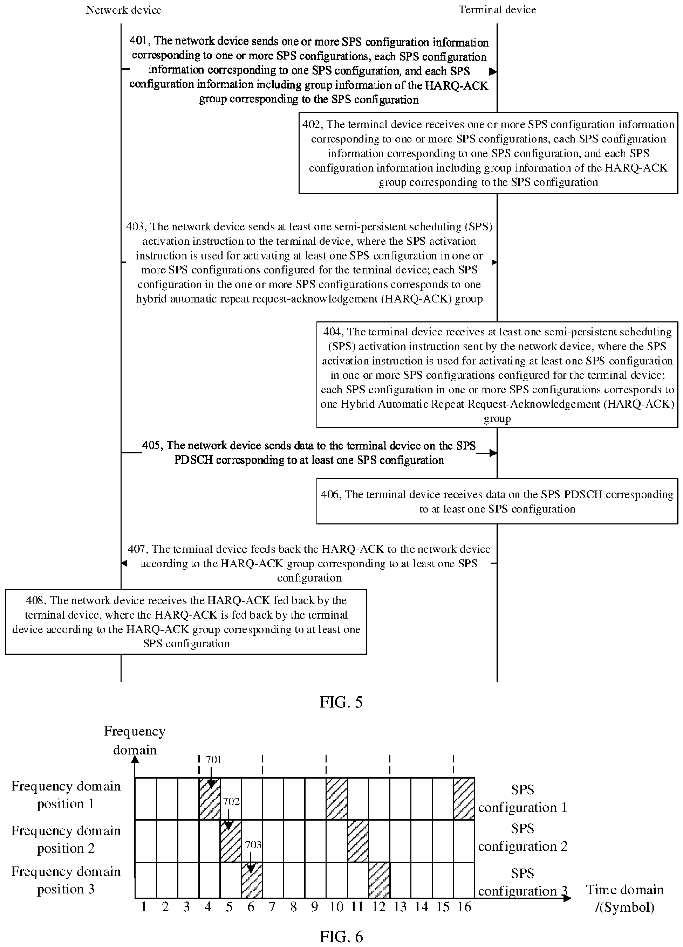

FIG. 5 shows a flowchart of a feedback method for semi-persistent scheduling provided by an exemplary embodiment of the present application. The method can be applied to the communication system shown in FIG. 1, and the method includes the following steps.

**In step 401:** the network device sends one or more pieces of SPS configuration information corresponding to one or more SPS configurations, each piece of SPS configuration information corresponds to one SPS configuration, and each piece of SPS configuration information includes group information of the HARQ-ACK group corresponding to the SPS configuration.

Exemplarily, the network device sends SPS configuration information (e.g., SPS-Config) of one or more SPS configurations to the terminal device through Radio Resource Control (RRC) signaling. Each RRC signaling is used for sending SPS configuration information corresponding to one SPS configuration, but this embodiment does not exclude the possibility that one RRC signaling is used for sending multiple pieces of SPS configuration information corresponding to multiple SPS configurations.

Each SPS configuration corresponds to one piece of SPS configuration information, and each piece of SPS configuration information includes configuration information of one or more SPS PDSCHs. Exemplarily, the network device adds the group information of the HARQ-ACK group corresponding to the SPS configuration in the configuration parameter of each piece of SPS configuration information. The group information may be an HARQ-ACK group ID.

For example, the network device sends 7 SPS configuration information (SPS-configs) to the terminal device, each piece of SPS configuration information corresponds to one SPS configuration, and the group information of the HARQ-ACK group corresponding to the SPS configuration (for example, HARQ-ACK group ID). If the HARQ-ACK group IDs in the 7 SPS configurations are the same, the 7 SPS configurations correspond to the same HARQ-ACK group. When data is sent on the PDSCHs corresponding to the 7 SPS configurations, the terminal device may feed back the HARQ-ACK by using the same HARQ-ACK resource. Exemplarily, the same HARQ-ACK resource refers to the same HARQ-ACK feedback time unit.

For example, as shown in Table 1, the network device sends three pieces of SPS configuration information to the terminal device to indicate three SPS configurations to the terminal device, and each SPS configuration includes a period of the SPS configuration, a frequency domain position, and an HARQ-ACK group ID, etc. It can be seen from Table 1 that the HARQ-ACK group IDs of the three SPS configurations are all 001, and the three SPS configurations belong to the same HARQ-ACK group.

**Table 1**

| SPS configuration information | SPS configuration | Period | Frequency domain position | HARQ-ACK group ID |
|---|---|---|---|---|
| SPS configuration information 1 | SPS configuration 1 | 6 symbols | Frequency domain position 1 | 001 |
| SPS configuration information 2 | SPS configuration 2 | 6 symbols | Frequency domain position 2 | 001 |
| SPS configuration information 3 | SPS configuration 3 | 6 symbols | Frequency domain position 3 | 001 |

Exemplarily, the above step 401 is optional, and the above-mentioned one or more pieces of SPS configuration information can also be preset in the terminal device; or it can be configured by the network device to the terminal device at one time, and can be used directly when there is subsequent data to be sent.

**In step 402:** the terminal device receives one or more pieces of SPS configuration information corresponding to one or more SPS configurations, where each piece of SPS configuration information corresponds to one SPS configuration, and each piece of SPS configuration information includes group information of the HARQ-ACK group corresponding to the SPS configuration.

The terminal device receives one or more RRC signaling, and each RRC signaling carries SPS configuration information of one SPS configuration. However, in this embodiment, the possibility that one RRC signaling carries SPS configuration information of at least two SPS configurations is not excluded.

Optionally, the group information of the HARQ-ACK group is the HARQ-ACK group identifier.

**In step 403:** the network device sends at least one semi-persistent scheduling (SPS) activation instruction to the terminal device, where the SPS activation instruction is used for activating at least one SPS configuration in one or more SPS configurations configured for the terminal device; each SPS configuration in the one or more SPS configurations corresponds to one hybrid automatic repeat request-acknowledgement (HARQ-ACK) group.

Exemplarily, when there is downlink data to be sent, the network device sends an SPS activation instruction to the terminal device, where the SPS activation instruction is used for activating the SPS configuration corresponding to at least one piece of SPS configuration information in one or more pieces of SPS configuration information. Exemplarily, the network device sends the SPS activation instruction to the terminal device through DCI signaling. Exemplarily, one SPS configuration corresponds to one SPS activation instruction, and the SPS activation instruction indicates the time domain position of the SPS PDSCH in the first period of the SPS configuration to the terminal device through information such as a slot offset and a symbol position in the slot.

Exemplarily, the SPS activation instruction also carries the SPS feedback timing information (Timing), and the SPS feedback timing is used for indicating the HARQ-ACK feedback time unit corresponding to the SPS configuration, so that the terminal device feeds back the HARQ-ACK to the network device through the HARQ-ACK feedback time unit. The HARQ-ACK is used for informing the network device of the data reception situation of the terminal device on the SPS PDSCH corresponding to the SPS configuration.

The HARQ-ACK feedback time unit may be a slot, a subslot, a symbol, a subframe, etc., which is not limited in this embodiment. The above-mentioned SPS feedback timing information may directly indicate the HARQ-ACK feedback time unit corresponding to each SPS PDSCH; it may also be indirectly indicated by a feedback offset or parameter. For example, the SPS feedback timing information includes a feedback offset k, where the feedback offset k is used for instructing the terminal device to feed back the HARQ-ACK on the k^{th} slot after the last slot for receiving the SPS PDSCH.

Illustratively, there are multiple SPS configurations corresponding to the same HARQ-ACK group, and the network device indicates the SPS feedback timing information to multiple SPS configurations, so that the HARQ feedback time units of the multiple SPS configurations in the same HARQ feedback period are the same, for example, the same one or more HARQ feedback time units.

For example, the SPS activation instruction includes a symbol offset and a feedback offset. The terminal device obtains the time domain position *a*+*b* of the first SPS PDSCH of the SPS configuration by adding the symbol offset *b* to the time domain position *a* for receiving the SPS activation instruction. The terminal device obtains the HARQ-ACK feedback time unit n+k corresponding to the SPS PDSCH according to the feedback offset k and the time domain position n of the SPS PDSCH.

For example, as shown in Table 2, the network device sends three SPS activation instructions corresponding to three SPS configurations to the terminal device, and each SPS activation instruction includes the symbol offset and feedback offset of the SPS configuration.

**Table 2**

| SPS activation instruction | SPS configuration | Symbol offset | Feedback offset |
|---|---|---|---|
| SPS activation instruction 1 | SPS configuration 1 | 1 symbol | 4 symbols |
| SPS activation instruction 2 | SPS configuration 2 | 2 symbols | 3 symbols |
| SPS activation instruction 3 | SPS configuration 3 | 3 symbols | 2 symbols |

Exemplarily, taking the terminal device receiving three pieces of SPS configuration information as shown in Table 1 and receiving three SPS activation instructions as shown in Table 2 as an example, the configuration and activation process of the SPS configuration will be described in conjunction with FIG. 6. According to Table 1, the network device allocates three SPS configurations for the terminal device, which are located in frequency domain position 1, frequency domain position 2 and frequency domain position 3 respectively, and the period of the three SPS configurations is 6 symbols. Assuming that three SPS activation instructions sent by the network device are received at symbol 3 by the terminal device, according to Table 2, the symbol of the first SPS PDSCH of SPS configuration 1 is the symbol 4 that is obtained by offsetting the symbol 3 by 1 symbol, that is, the first SPS PDSCH of SPS configuration 1 is the SPS PDSCH 701 located at frequency domain position 1 and symbol 4; the symbol of the first SPS PDSCH of the SPS configuration 2 is the symbol 5 that is obtained by offsetting the symbol 3 by 2 symbols, that is, the first SPS PDSCH of the SPS configuration 2 is the SPS PDSCH 702 located at the frequency domain position 2 and the symbol 5; the symbol of the first SPS PDSCH of the SPS configuration 3 is the symbol 6 that is obtained by offsetting the symbol 3 by 3 symbols, that is, the first SPS PDSCH of the SPS configuration 3 is the SPS PDSCH 703 located at the frequency domain position 3 and symbol 6. According to the period (6 symbols) of each SPS configuration, the symbol position of the next SPS PDSCH of each SPS can be determined, that is, as shown in FIG. 6, the SPS PDSCH in the shaded part in the figure. According to Table 2, the feedback offset of SPS configuration 1 is 4 symbols, then for the first SPS PDSCH of SPS configuration 1, the HARQ-ACK feedback time unit is symbol 4 plus 4 symbols and equal to symbol 8; the feedback offset of SPS configuration 2 is 3 symbols, then for the first SPS PDSCH of SPS configuration 2, its HARQ-ACK feedback time unit is symbol 5 plus 3 symbols and equal to symbol 8; the feedback offset of SPS configuration 3 is 2 symbols, then for the first SPS PDSCH of SPS configuration 3, its HARQ-ACK feedback time unit is symbol 6 plus 2 symbols and equal to symbol 8. It can be seen that the three SPS configurations all feed back HARQ-ACK at symbol 8, and the three SPS configurations belong to the same HARQ-ACK feedback time unit.

Exemplarily, the network device may divide multiple SPS configurations configured for the terminal device into the same HARQ-ACK group, or may divide the multiple SPS configurations into multiple different HARQ-ACK groups.

Exemplarily, after configuring multiple SPS configurations for the terminal device, the network device may activate all of the multiple SPS configurations, or only activate a part of them.

Exemplarily, the SPS configurations in the same HARQ-ACK group may point to the same HARQ-ACK feedback time unit, or may point to different HARQ-ACK feedback time units.

In an exemplary embodiment, for SPS configurations with the same HARQ-ACK group (for example, the same HARQ-ACK group ID), the SPS feedback timing information points to the same feedback time (HARQ-ACK feedback time unit), for example, the same slot, the same subslot, the same one or several symbols, or the same subframe, etc. In another exemplary embodiment, for SPS configurations with the same HARQ-ACK group (e.g., same HARQ-ACK group ID), their SPS feedback timing information points to different feedback times (HARQ-ACK feedback time units), e.g., different slots, different subslots, different symbol(s), or different subframes, etc.

The unit of feedback time can be related to the priority in the SPS activation instruction. For example, high priority corresponds to the subslot, and low priority corresponds to the slot. The corresponding relationship can be configured at a high layer. Exemplarily, the SPS feedback timing information is carried by SPS activation signaling, and exemplarily, the SPS feedback timing information may also be configured by high-layer signaling.

Exemplarily, the HARQ-ACK feedback time unit in the above example is independently set for each SPS configuration; the HARQ-ACK feedback time unit may also be independently set for each HARQ-ACK group. For example, the first HARQ-ACK feedback time unit is indicated for the first HARQ-ACK group.

**In step 404:** the terminal device receives at least one semi-persistent scheduling (SPS) activation instruction sent by the network device, the SPS activation instruction is used for activating at least one SPS configuration in one or more SPS configurations configured for the terminal device; each SPS configuration in one or more SPS configurations corresponds to one Hybrid Automatic Repeat Request-Acknowledgement (HARQ-ACK) group.

**In step 405:** the network device sends data to the terminal device on an SPS PDSCH corresponding to at least one SPS configuration.

**In step 406:** the terminal device receives data on the SPS PDSCH corresponding to at least one SPS configuration.

Because each piece of SPS configuration information includes the group information of the HARQ-ACK group of the corresponding SPS configuration, the terminal device can send the HARQ-ACK to the network device according to the HARQ-ACK group according to the group information of the HARQ-ACK group corresponding to the above-mentioned activated at least one SPS configuration. The network device receives the HARQ-ACK sent by the terminal device. For example, when the above at least one SPS configuration corresponds to the same HARQ-ACK group, when the terminal device correctly receives data on the SPS PDSCH corresponding to any one or several SPS configurations of the at least one SPS configuration, it can feed back the HARQ-ACK through the HARQ-ACK resource corresponding to the HARQ-ACK group.

For example, when the terminal device in step 406 correctly receives data on the SPS PDSCH corresponding to the activated at least one SPS configuration information, it feeds back an ACK. If no data is correctly received on all APA PDSCHs corresponding to the at least one SPS configuration information, NACK is fed back.

**In step 407:** the terminal device feeds back the HARQ-ACK to the network device according to the HARQ-ACK group corresponding to at least one SPS configuration.

**In step 408:** the network device receives the HARQ-ACK fed back by the terminal device, where the HARQ-ACK is fed back by the terminal device according to the HARQ-ACK group corresponding to at least one SPS configuration.

Exemplarily, this technology can also be used for sidelink, i.e., communication between terminal devices.

To sum up, the method provided in this embodiment makes the terminal device perform HARQ-ACK feedback according to the HARQ-ACK group by grouping the SPS PDSCHs corresponding to at least one SPS configuration, which simplifies the HARQ-ACK feedback manner and avoids redundancy and invalid HARQ-ACK feedback, improves the reliability and efficiency of uplink transmission, and reduces the power consumption of the terminal device.

Exemplarily, the present application provides an exemplary embodiment in which six terminal devices perform HARQ-ACK feedback according to the HARQ-ACK group.

First, the feedback information bit corresponding to one HARQ-ACK group may be 1 bit, or may be n bits determined according to the number of SPS configurations in the HARQ-ACK group. Then, multiple SPS configurations in the same HARQ-ACK group may feed back HARQ-ACK through the same HARQ-ACK feedback time unit, or may feed back HARQ-ACK through multiple different HARQ-ACK feedback time units. When the SPS configurations of the same HARQ-ACK group feed back HARQ-ACK through multiple different HARQ-ACK feedback time units, the terminal device can feed back HARQ-ACK in each HARQ-ACK feedback time unit, or it can only feed back HARQ-ACK in the last HARQ-ACK feedback time unit.

Therefore, this embodiment presents exemplary embodiments of the following six situations:
1. The SPS configurations of the same HARQ-ACK group feed back HARQ-ACK through the same HARQ-ACK feedback time unit, and the HARQ-ACK group occupies 1 bit of feedback information bit in the HARQ-ACK feedback time unit.
2. The SPS configurations of the same HARQ-ACK group feed back HARQ-ACK through the same HARQ-ACK feedback time unit, and the HARQ-ACK group occupies n bits of feedback information bit in the HARQ-ACK feedback time unit, where n is the number of SPS configurations in the HARQ-ACK group.
3. The SPS configurations of the same HARQ-ACK group feed back HARQ-ACK through different HARQ-ACK feedback time units. The HARQ-ACK group occupies 1 bit of feedback information bit in each HARQ-ACK feedback time unit, and HARQ-ACK is fed back in each HARQ-ACK feedback time unit.
4. The SPS configurations of the same HARQ-ACK group feed back HARQ-ACK through different HARQ-ACK feedback time units, and the HARQ-ACK group occupies 1 bit of feedback information bit in the last HARQ-ACK feedback time unit, and the HARQ-ACK is only fed back in the last HARQ-ACK feedback time unit.
5. The SPS configurations of the same HARQ-ACK group feed back HARQ-ACK through different HARQ-ACK feedback time units, nⱼ bits of feedback information bit are occupied in each HARQ-ACK feedback time unit, and HARQ-ACK is fed back in each HARQ-ACK feedback time unit, where nⱼ is the number of SPS configurations corresponding to the j^{th} HARQ-ACK feedback time unit.
6. The SPS configurations of the same HARQ-ACK group feed back HARQ-ACK through different HARQ-ACK feedback time units, nₖ bits of feedback information bit are occupied in the last HARQ-ACK feedback time unit, and the HARQ-ACK is only fed back in the last HARQ-ACK feedback time unit, where nₖ is the number of SPS configurations corresponding to the last HARQ-ACK feedback time unit.

### Exemplary embodiment for the first situation.

That is, the SPS configurations of the same HARQ-ACK group feed back HARQ-ACK through the same HARQ-ACK feedback time unit, and the HARQ-ACK group occupies 1 bit of feedback information bit in the HARQ-ACK feedback time unit.

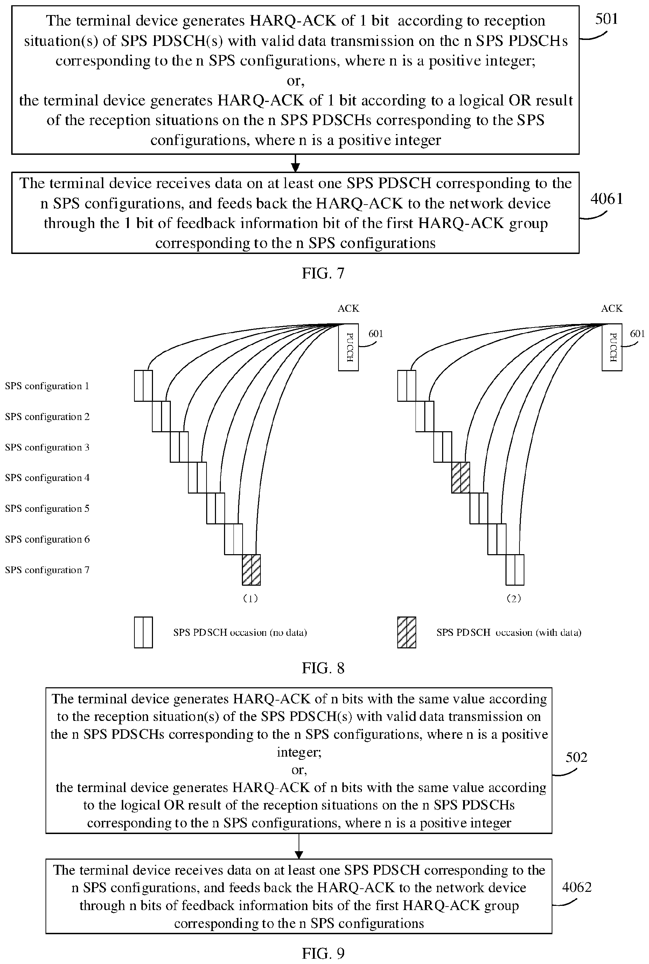

FIG. 7 shows a flowchart of a feedback method for semi-persistent scheduling provided by an exemplary embodiment of the present application. The method can be applied to the terminal device in the communication system shown in FIG. 1. Based on the exemplary embodiment shown in FIG. 5, before step 406, step 501 is further included, and step 406 further includes step 4061.

Exemplarily, there are activated n SPS configurations corresponding to the first HARQ-ACK group; n SPS configurations in the first HARQ-ACK group correspond to the same HARQ-ACK feedback time unit, n is a positive integer; the first HARQ-ACK group corresponds to 1 bit of feedback information bit, and n is a positive integer. Exemplarily, the terminal device receives data on at least one SPS PDSCH corresponding to the n SPS configurations, and feeds back the HARQ-ACK to the network device through 1 bit of feedback information bit of the first HARQ-ACK group corresponding to the n SPS configurations.

**In step 501:** the terminal device generates HARQ-ACK of 1 bit according to a reception situation of an SPS PDSCH on which valid data transmission occurs in n SPS PDSCHs corresponding to the n SPS configurations, where n is a positive integer; or, the terminal device generates HARQ-ACK of 1 bit according to a logical OR result of reception situations on n SPS PDSCHs corresponding to the SPS configurations, where n is a positive integer.

For example, as shown in FIG. 8, the network device divides 7 SPS configurations into the same HARQ-ACK group, then n is 7, and the SPS configurations in the HARQ-ACK group correspond to the same HARQ-ACK feedback time unit 601. Through the HARQ-ACK feedback time unit 601, the terminal device feeds back the data reception situations on the SPS PDSCHs of the 7 SPS configurations to the network device with HARQ-ACK of 1 bit.

**In step 4061:** the terminal device receives data on at least one SPS PDSCH corresponding to the n SPS configurations, and feeds back the HARQ-ACK to the network device through the 1 bit of feedback information bit of the first HARQ-ACK group corresponding to the n SPS configurations.

Exemplarily, if the terminal device correctly receives data on a certain SPS PDSCH in n SPS configurations (the SPS PDSCH carries data and the data is correctly received by the terminal device), the terminal device feeds back to the network device 1 bit of HARQ: ACK, to indicate that the data has been received correctly. If the terminal device does not receive data correctly on the n SPS PDSCHs, the terminal device feeds back to the network device HARQ-ACK of 1 bit: NACK, to indicate that the data is not correctly received. Therefore, the terminal device only needs to send a 1-bit HARQ-ACK to the network device to inform the network device whether the data is correctly received in the current period, thereby reducing the amount of data for sending HARQ-ACK by the terminal device, improving the efficiency of uplink transmission, and reducing the power consumption of the terminal device.

Exemplarily, the terminal device may also perform an operation of "OR" on the HARQ-ACKs of the SPS PDSCHs in the same HARQ-ACK group, that is, as long as the terminal device correctly receives data on at least one SPS PDSCH in the same HARQ-ACK group, then the terminal device feeds back ACK, and only if all SPS PDSCHs in the same HARQ-ACK group have not received data correctly, NACK is fed back.

For example, as shown in (1) in FIG. 8, the SPS PDSCH of SPS configuration 7 carries data, and the terminal device correctly receives data on the SPS PDSCH of SPS configuration 7, then the terminal device generates a 1-bit HARQ-ACK: ACK, and sends the HARQ-ACK: ACK to the network device. As shown in (2) in FIG. 8, the SPS PDSCH of SPS configuration 4 carries data, and the terminal device correctly receives data on the SPS PDSCH of SPS configuration 4, then the terminal device generates a 1-bit HARQ-ACK: ACK, and sends the HARQ-ACK: ACK to the network device.

To sum up, in the method provided in this embodiment, the terminal device generates a 1-bit HARQ-ACK according to whether data is correctly received on the SPS PDSCH in one HARQ-ACK group. If the terminal device receives the data correctly, it feeds back ACK to the network device, and if the terminal device does not receive the data correctly, it feeds back NACK. Therefore, the amount of data for sending HARQ-ACK by the terminal device is reduced, the efficiency of uplink transmission is improved, and the power consumption of the terminal device is reduced.

### Exemplary embodiment for the second situation.

That is, the SPS configurations of the same HARQ-ACK group feed back HARQ-ACK through the same HARQ-ACK feedback time unit, and the HARQ-ACK group occupies n bits of feedback information bit in the HARQ-ACK feedback time unit, where n is the number of SPS configurations in the HARQ-ACK group.

FIG. 9 shows a flowchart of a feedback method for semi-persistent scheduling provided by an exemplary embodiment of the present application. The method can be applied to the terminal device in the communication system shown in FIG. 1. Based on the exemplary embodiment shown in FIG. 5, step 502 is further included before step 406, and step 406 further includes step 4062.

Exemplarily, there are activated n SPS configurations corresponding to the first HARQ-ACK group; n SPS configurations of the first HARQ-ACK group correspond to the same HARQ-ACK feedback time unit, n is a positive integer; the first HARQ-ACK group corresponds to n bits of feedback information bit, and n is a positive integer; exemplarily, the terminal device receives data on at least one SPS PDSCH corresponding to n SPS configurations, and feeds back the HARQ-ACK to the network device through the 1 bit of feedback information bit of the first HARQ-ACK group corresponding to the n SPS configurations.

**In step 502:** the terminal device generates HARQ-ACK of n bits with the same value according to a reception situation of an SPS PDSCH on which valid data transmission occurs in n SPS PDSCHs corresponding to the n SPS configurations, where n is a positive integer; or the terminal device generates HARQ-ACK of n bits with the same value according to a logical OR result of reception situations on n SPS PDSCHs corresponding to the n SPS configurations, where n is a positive integer.

**In step 4062:** the terminal device receives data on at least one SPS PDSCH corresponding to the n SPS configurations, and feeds back the HARQ-ACK to the network device through the n bits of feedback information bit of the first HARQ-ACK group corresponding to the n SPS configurations.

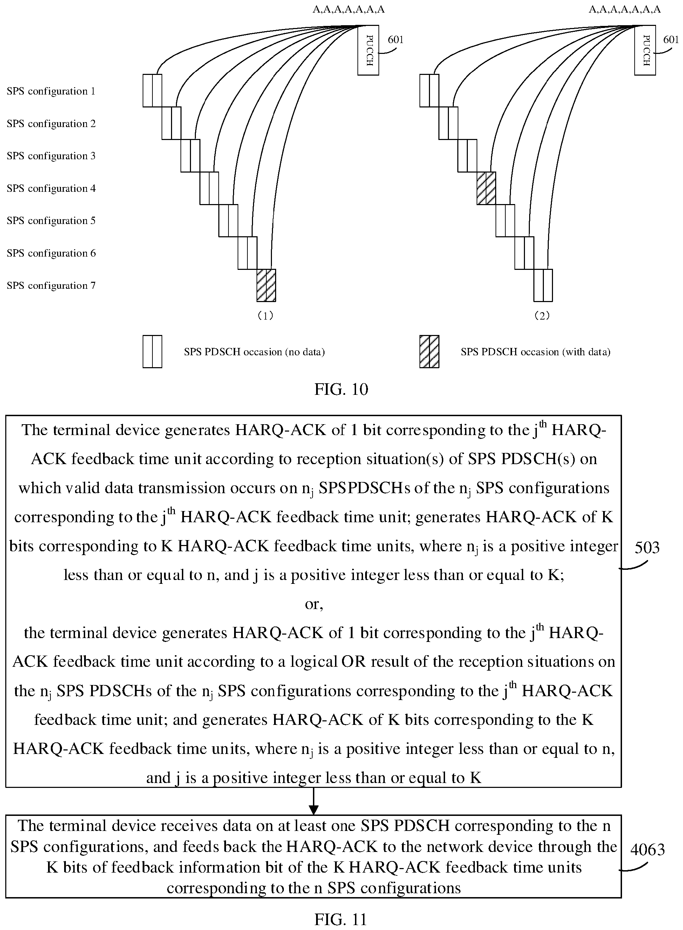

For example, as shown in FIG. 10, the network device divides 7 SPS configurations into the same HARQ-ACK group, then n is 7, and the SPS PDSCHs in the HARQ-ACK group correspond to the same HARQ-ACK feedback time unit 601. The terminal device feeds back the data reception situation on the SPS PDSCH of the 7 SPS configurations to the network device through the HARQ-ACK feedback time unit 601 with HARQ-ACK of 7 bits.

Exemplarily, if the terminal device correctly receives data on at least one SPS PDSCH in n SPS configurations (the SPS PDSCH carries data and the data is successfully received by the terminal device), the terminal device feeds back to the network device n bits of feedback information: n ACKs, to indicate that the data has been received correctly. If the terminal device does not correctly receive data on the SPS PDSCH in n SPS configurations, the terminal device feeds back to the network device n bits of feedback information: n NACKs, to indicate that the data is not correctly received. Therefore, the terminal device may send the same n bits of the same HARQ-ACK to the network device to inform the network device whether the data is correctly received in the current period, if the data is received correctly, n ACKs will be sent, and if the data is not received correctly, n NACKs will be sent. Thus, the reliability of the uplink transmission of the terminal device is improved. Even if some HARQ-ACKs are interfered during the communication process, the network device can accurately determine whether the terminal deice has received the data correctly. For example, if two of the seven ACKs sent by the terminal device are disturbed and become NACKs, the network device can also determine that the terminal device has correctly received the data according to the ACKs which account for the majority in the HARQ-ACK.

For example, as shown in (1) in FIG. 10, the SPS PDSCH of SPS configuration 7 carries data, and the terminal device correctly receives data in the SPS PDSCH of SPS configuration 7, then the terminal device generates HARQ-ACK of 7 bits: ACK, ACK, ACK, ACK, ACK, ACK, ACK, and sends to the network device the HARQ-ACK: ACK, ACK, ACK, ACK, ACK, ACK, ACK. As shown in (2) in FIG. 10, the SPS PDSCH of SPS configuration 4 carries data, and the terminal device correctly receives data in the SPS PDSCH of SPS configuration 4, then the terminal device generates HARQ-ACK of 7 bits: ACK, ACK, ACK, ACK, ACK, ACK, ACK, and sends to the network device the HARQ-ACK: ACK, ACK, ACK, ACK, ACK, ACK, ACK.

To sum up, in the method provided in this embodiment, the terminal device generates HARQ-ACK of n bits according to whether data is correctly received on the SPS PDSCH of the SPS configuration in one HARQ-ACK group. If the terminal device receives the data correctly, it feeds back n ACKs to the network device, and if the terminal device does not receive the data correctly, it feeds back n NACKs, thereby improving the accuracy of uplink transmission.

### Exemplary embodiment for the third situation.

That is, the SPS configurations of the same HARQ-ACK group feed back HARQ-ACK through different HARQ-ACK feedback time units, the HARQ-ACK group occupies 1 bit of feedback information bit in each HARQ-ACK feedback time unit, and feeds back HARQ-ACK in each HARQ-ACK feedback time unit.

FIG. 11 shows a flowchart of a feedback method for semi-persistent scheduling provided by an exemplary embodiment of the present application. The method can be applied to the terminal device in the communication system shown in FIG. 1. Based on the exemplary embodiment shown in FIG. 5, before step 406, step 503 is further included, and step 406 further includes step 4063.

There are activated n SPS configurations corresponding to the second HARQ-ACK group; n SPS configurations in the second HARQ-ACK group correspond to K HARQ-ACK feedback time units, where K is a positive integer; each HARQ-ACK feedback time unit corresponds to 1 bit of feedback information bit, the second HARQ-ACK group corresponds to K bits of feedback information bit in total, and n and K are positive integers; exemplarily, the terminal device receives data on the SPS PDSCH corresponding to n SPS configurations, and feeds back HARQ-ACK to the network device within K HARQ-ACK feedback time units corresponding to the SPS configurations.

**In step 503:** the terminal device generates HARQ-ACK of 1 bit corresponding to the j^{th} HARQ-ACK feedback time unit according to a reception situation of an SPS PDSCH on which valid data transmission occurs in nⱼ SPS PDSCHs of nⱼ SPS configurations corresponding to the j^{th} HARQ-ACK feedback time unit; generates HARQ-ACK of K bits corresponding to K HARQ-ACK feedback time units, nⱼ is a positive integer less than or equal to n, and j is a positive integer less than or equal to K; or the terminal device generates HARQ-ACK of 1 bit corresponding to the j^{th} HARQ-ACK feedback time unit according to a logical OR result of reception situations on nⱼ SPS PDSCHs of nⱼ SPS configurations corresponding to the j^{th} HARQ-ACK feedback time unit; and generates HARQ-ACK of K bits corresponding to the K HARQ-ACK feedback time units, where nⱼ is a positive integer less than or equal to n, and j is a positive integer less than or equal to K.

**In step 4063:** the terminal device receives data on at least one SPS PDSCH corresponding to the n SPS configurations, and feeds back the HARQ-ACK to the network device through the K bits of feedback information bit of the K HARQ-ACK feedback time units corresponding to the n SPS configurations.

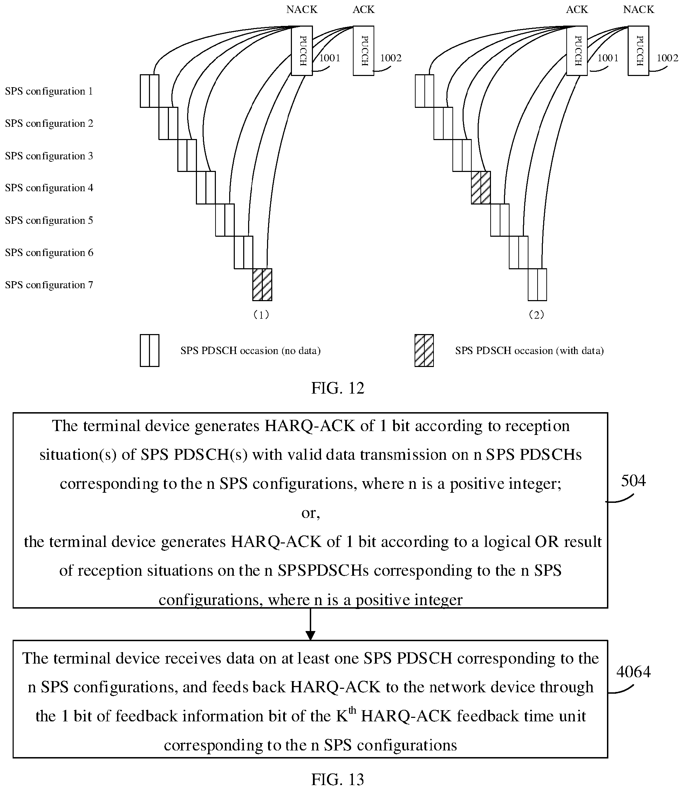

For example, as shown in FIG. 12, the network device divides 7 SPS configurations into the same HARQ-ACK group, then n is 7, and the SPS configurations in this group correspond to two HARQ-ACK feedback time units: the first HARQ-ACK feedback time unit 1001 and the second HARQ-ACK feedback time unit 1002, that is, K is set to 2. Among them, SPS configuration 1, SPS configuration 2, SPS configuration 3 and SPS configuration 4 correspond to the first HARQ-ACK feedback time unit 1001; SPS configuration 5, SPS configuration 6 and SPS configuration 7 correspond to the second HARQ-ACK feedback time unit 1001. That is, 4 SPS configurations correspond to the first HARQ-ACK feedback time unit; 3 SPS configurations correspond to the second HARQ-ACK feedback time unit. The terminal device feeds back the data reception situations on the SPS PDSCHs of the 7 SPS configurations to the network device through two HARQ-ACK feedback time units respectively with HARQ-ACK of 1 bit.

Exemplarily, the terminal device determines the HARQ-ACK on the j^{th} HARQ-ACK feedback time unit according to the data reception situations in the SPS PDSCHs of the nⱼ SPS configurations corresponding to the j^{th} HARQ-ACK feedback time unit. If the terminal device correctly receives data on at least one SPS PDSCH in the SPS PDSCHs of the nⱼ SPS configurations, the terminal device feeds back HARQ-ACK of 1 bit: ACK to the network device through the j^{th} HARQ-ACK feedback time unit, to indicate that data has been correctly received in the SPS PDSCH of the nⱼ SPS configurations corresponding to the j^{th} HARQ-ACK feedback time unit. If the terminal device does not receive data correctly on the SPS PDSCHs of the nⱼ SPS configurations, the terminal device feeds back HARQ-ACK of 1 bit: NACK to the network device through the j^{th} HARQ-ACK feedback time unit, indicating that no data is correctly received in the SPS PDSCHs of the nⱼ SPS configurations corresponding to the j^{th} HARQ-ACK feedback time unit. Therefore, the terminal device only needs to send HARQ-ACK of 2 bits to the network device to inform the network device whether the data is correctly received in the current period, thereby reducing the amount of data for the terminal device to send HARQ-ACK, improving the efficiency of uplink transmission and reducing the power consumption of the terminal device.

Exemplarily, the terminal device may also perform an operation of "OR" on the HARQ-ACKs of the SPS configurations corresponding to the same HARQ-ACK feedback time unit, that is, as long as at least one SPS PDSCH in the SPS configurations corresponding to the same HARQ-ACK feedback time unit receives data correctly, the terminal device feeds back ACK. NACK is fed back only if all SPS PDSCHs in the SPS configurations corresponding to the same HARQ-ACK feedback time unit have not received data correctly.

For example, as shown in (1) in FIG. 12, the SPS PDSCH of SPS configuration 7 carries data, and the terminal device correctly receives data in the SPS PDSCH of SPS configuration 7. Since the terminal device does not receive data correctly in the SPS PDSCHs of the first four SPS configurations (there is no data on the SPS PDSCHs of the first four SPS configurations), the terminal device generates HARQ-ACK of 1 bit: NACK in the first HARQ-ACK feedback time unit 1001. Since the terminal device does not receive data correctly in the SPS PDSCHs of SPS configuration 5 and SPS configuration 6, and correctly receives data in the SPS PDSCH of SPS configuration 7, then in the second HARQ-ACK feedback time unit 1002, the terminal device generates HARQ-ACK of 1 bit: ACK, and sends two HARQ-ACKs: NACK and ACK of two HARQ-ACK feedback time units to the network device. As shown in (2) in FIG. 12, the SPS PDSCH of SPS configuration 4 carries data, and the terminal device correctly receives data in the SPS PDSCH of SPS configuration 4, but does not correctly receive data in the SPS PDSCHs of the other 6 SPS configurations, Then the terminal device generates HARQ-ACK of 1 bit: ACK in the first HARQ-ACK feedback time unit 1001, and generates HARQ-ACK of 1 bit: NACK in the second HARQ-ACK feedback time unit 1002, and sends two HARQ-ACKs for two HARQ-ACK feedback time units: ACK and NACK to the network device.

To sum up, in the method provided in this embodiment, the terminal device generates HARQ-ACK of 1 bit in the respective HARQ-ACK feedback time unit according to whether the data is correctly received in at least one SPS configuration corresponding to the HARQ-ACK feedback time unit. If the terminal device receives the data correctly, it feeds back ACK to the network device through the HARQ-ACK feedback time unit, and if the terminal device does not receive the data correctly, it feeds back NACK to the network device through the HARQ-ACK feedback time unit. Therefore, the amount of data of the terminal device for sending HARQ-ACK is reduced, the efficiency of uplink transmission is improved, and the power consumption of the terminal device is reduced.

### Exemplary embodiment for the fourth situation.

That is, the SPS configurations of the same HARQ-ACK group feed back HARQ-ACK through different HARQ-ACK feedback time units, the HARQ-ACK group occupies 1 bit of feedback information bit in the last HARQ-ACK feedback time unit, and the HARQ-ACK is only fed back in the last HARQ-ACK feedback time unit.

FIG. 13 shows a flowchart of a feedback method for semi-persistent scheduling provided by an exemplary embodiment of the present application. The method can be applied to the terminal device in the communication system shown in FIG. 1. Based on the exemplary embodiment shown in FIG. 5, step 504 is further included before step 406, and step 406 further includes step 4064.

There are activated n SPS configurations corresponding to the second HARQ-ACK group; the n SPS configurations of the second HARQ-ACK group correspond to K HARQ-ACK feedback time units, where K is a positive integer; the K^{th} HARQ-ACK feedback time unit corresponds to 1 bit of feedback information bit, and the second HARQ-ACK group corresponds to 1 bit of feedback information bit, and n and K are positive integers; exemplarily, the terminal device receives the data on the SPS PDSCH corresponding to n SPS configurations, and feeds back the HARQ-ACK to the network device within K HARQ-ACK feedback time units corresponding to the n SPS configurations.

**In step 504:** the terminal device generates HARQ-ACK of 1 bit according to the reception situation of the SPS PDSCH with valid data transmission in n SPS PDSCHs corresponding to the n SPS configurations, where n is a positive integer; or the terminal device generates HARQ-ACK of 1 bit according to the logical OR result of the reception situations on the n SPS PDSCHs corresponding to the n SPS configurations, where n is a positive integer.

**In step 4064:** the terminal device receives data on at least one SPS PDSCH corresponding to the n SPS configurations, and feeds back the HARQ-ACK to the network device through the 1 bit of feedback information bit of the K^{th} HARQ-ACK feedback time unit corresponding to the n SPS configurations.

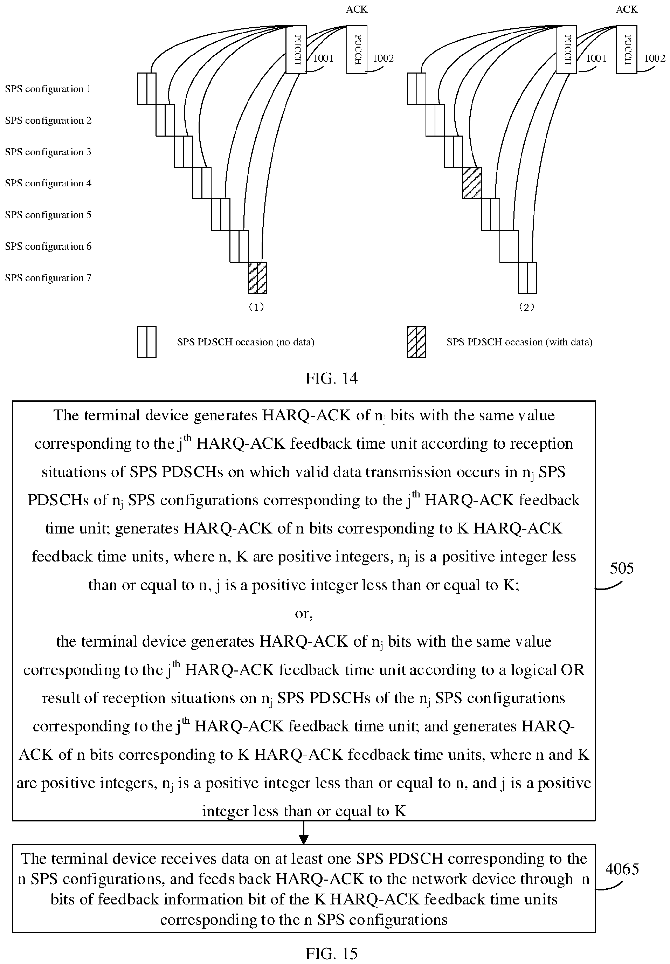

For example, as shown in FIG. 14, the network device divides 7 SPS configurations into the same HARQ-ACK group, then n is 7, and the SPS configurations in this group correspond to two HARQ-ACK feedback time units: the first HARQ-ACK feedback time unit 1001 and the second HARQ-ACK feedback time unit 1002, that is, K is set to 2. Among them, SPS configuration 1, SPS configuration 2, SPS configuration 3 and SPS configuration 4 correspond to the first HARQ-ACK feedback time unit 1001; SPS configuration 5, SPS configuration 6 and SPS configuration 7 correspond to the second HARQ-ACK feedback time unit 1002. That is, 4 SPS configurations correspond to the first HARQ-ACK feedback time unit; 3 SPS configurations correspond to the second HARQ-ACK feedback time unit. The terminal device only feeds back the data reception situation on the SPS PDSCH of 7 SPS configurations to the network device through the second HARQ-ACK feedback time unit with HARQ-ACK of 1 bit.

Exemplarily, the terminal device determines the HARQ-ACK on the K^{th} HARQ-ACK feedback time unit (the last HARQ-ACK feedback time unit) according to the data reception situations in the SPS PDSCHs of n SPS configurations of one HARQ-ACK group. If the terminal device correctly receives data on at least one SPS PDSCH among the SPS PDSCHs of n SPS configurations, the terminal device feeds back HARQ-ACK of 1 bit: ACK to the network device through the K^{th} HARQ-ACK feedback time unit to indicate that the data was received correctly. If the terminal device does not receive data correctly on the SPS PDSCH of n SPS configurations, the terminal device feeds back HARQ-ACK of 1 bit: NACK to the network device through the K^{th} HARQ-ACK feedback time unit to indicate that the data was not received correctly. Therefore, the terminal device only needs to send HARQ-ACK of 1 bit to the network device to inform the network device whether the data is correctly received in the current period, thereby reducing the amount of data of the terminal device for sending HARQ-ACK, improving the efficiency of uplink transmission, and reducing the power consumption of the terminal device.

Exemplarily, the terminal device may also perform an operation of "OR" on the HARQ-ACKs of the SPS configurations of the same HARQ-ACK group, that is, as long as at least one SPS PDSCH in the SPS configurations of the same HARQ-ACK group receives data correctly, the terminal device feeds back ACK. NACK is fed back only if all SPS PDSCHs in the SPS configurations of the same HARQ-ACK group have not received data correctly.

For example, as shown in (1) in FIG. 14, the SPS PDSCH of SPS configuration 7 carries data, and the terminal device correctly receives data in the SPS PDSCH of SPS configuration 7. Since the terminal device does not receive data correctly in the SPS PDSCH of the first 6 SPS configurations (there is no data on the SPS PDSCH of the first 6 SPS configurations), if the data is correctly received in the SPS PDSCH of SPS configuration 7, the terminal device generates HARQ-ACK of 1 bit: ACK in the second HARQ-ACK feedback time unit 1002, and sends the HARQ-ACK: ACK to the network device. As shown in (2) in FIG. 14, the SPS PDSCH of SPS configuration 4 carries data, and the terminal device correctly receives data in the SPS PDSCH of SPS configuration 4, but does not correctly receive data in the SPS PDSCHs of the other 6 SPS configurations, then, the terminal device generates HARQ-ACK of 1 bit: ACK in the second HARQ-ACK feedback time unit 1002, and sends the HARQ-ACK: ACK to the network device.

To sum up, in the method provided in this embodiment, the terminal device generates HARQ-ACK of 1 bit in the last HARQ-ACK feedback time unit according to whether data is correctly received on the SPS PDSCHs of the SPS configurations of the same HARQ-ACK group. If the terminal device receives the data correctly, it feeds back ACK to the network device through the last HARQ-ACK feedback time unit, and if the terminal device does not receive the data correctly, it feeds back NACK to the network device through the last HARQ-ACK feedback time unit. Therefore, the amount of data of the terminal device for sending HARQ-ACK is reduced, the efficiency of uplink transmission is improved, and the power consumption of the terminal device is reduced.

### Exemplary embodiment for the fifth situation.

That is, the SPS configurations of the same HARQ-ACK group feed back HARQ-ACK through different HARQ-ACK feedback time units, nⱼ bits of feedback information bit are occupied in each HARQ-ACK feedback time unit, and in each HARQ-ACK feedback time unit, HARQ-ACK is fed back, where nⱼ is the number of SPS configurations corresponding to the j^{th} HARQ-ACK feedback time unit.

FIG. 15 shows a flowchart of a feedback method for semi-persistent scheduling provided by an exemplary embodiment of the present application. The method can be applied to the terminal device in the communication system shown in FIG. 1. Based on the exemplary embodiment shown in FIG. 5, before step 406, step 505 is further included, and step 406 further includes step 4065.

There are activated n SPS configurations corresponding to the second HARQ-ACK group; the n SPS configurations of the second HARQ-ACK group correspond to K HARQ-ACK feedback time units, where K is a positive integer; the j^{th} HARQ-ACK feedback time unit corresponds to nⱼ bits of feedback information bit, the second HARQ-ACK group corresponds to n bits of feedback information bit in total, nⱼ is the number of SPS configurations corresponding to the j^{th} HARQ-ACK feedback time unit, n is a positive integer, nⱼ is a positive integer less than or equal to n, and j is a positive integer less than or equal to K; exemplarily, the terminal device receives data on the SPS PDSCH corresponding to n SPS configurations, and feeds back HARQ-ACK to the network device within K HARQ-ACK feedback time units corresponding to n SPS configurations.

**In step 505:** the terminal device generates HARQ-ACK of nⱼ bits with the same value corresponding to the j^{th} HARQ-ACK feedback time unit according to the reception situations of the SPS PDSCHs on which valid data transmission occurs in nⱼ SPS PDSCHs of nⱼ SPS configurations corresponding to the j^{th} HARQ-ACK feedback time unit; generates HARQ-ACK of n bits corresponding to K HARQ-ACK feedback time units, where n, K are positive integers, nⱼ is a positive integer less than or equal to n, j is a positive integer less than or equal to K; or, the terminal device generates HARQ-ACK of nⱼ bits with the same value corresponding to the j^{th} HARQ-ACK feedback time unit according to the logical OR result of the reception situations on the nⱼ SPS PDSCHs of the nⱼ SPS configurations corresponding to the j^{th} HARQ-ACK feedback time unit; and generates HARQ-ACK of n bits corresponding to K HARQ-ACK feedback time units, where n and K are positive integers, nⱼ is a positive integer less than or equal to n, and j is a positive integer less than or equal to K.

**In step 4065:** the terminal device receives data on at least one SPS PDSCH corresponding to the n SPS configurations, and feeds back the HARQ-ACK to the network device through the n bits of feedback information bit of the K HARQ-ACK feedback time units corresponding to the n SPS configurations.

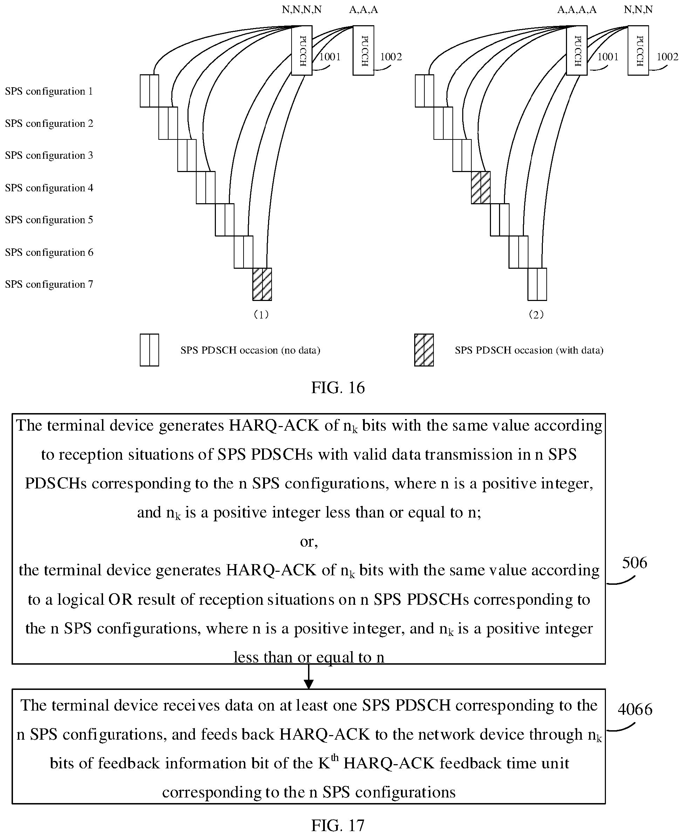

For example, as shown in FIG. 16, the network device divides 7 SPS configurations into the same HARQ-ACK group, then n is 7, and the SPS configurations in this group correspond to two HARQ-ACK feedback time units: the first HARQ-ACK feedback time unit 1001 and the second HARQ-ACK feedback time unit 1002, that is, K is set to 2. Among them, SPS configuration 1, SPS configuration 2, SPS configuration 3 and SPS configuration 4 correspond to the first HARQ-ACK feedback time unit 1001; SPS configuration 5, SPS configuration 6 and SPS configuration 7 correspond to the second HARQ-ACK feedback time unit 1002. That is, 4 SPS configurations correspond to the first HARQ-ACK feedback time unit; 3 SPS configurations correspond to the second HARQ-ACK feedback time unit. The terminal device feeds back the data reception situations on SPS PDSCHs of 7 SPS configurations to the network device through the first HARQ-ACK feedback time unit 1001 with HARQ-ACK of 4 bits, and the second HARQ-ACK feedback time unit 1002 with HARQ-ACK of 3 bits.

Exemplarily, the terminal device determines the HARQ-ACK on the j^{th} HARQ-ACK feedback time unit according to the data reception situations in the SPS PDSCHs of the nⱼ SPS configurations corresponding to the j^{th} HARQ-ACK feedback time unit. If the terminal device correctly receives data on at least one SPS PDSCH among the SPS PDSCHs of nⱼ SPS configurations, the terminal device feeds back HARQ-ACK of nⱼ bits: nⱼ ACKs to the network device through the j^{th} HARQ-ACK feedback time unit, to indicate that data has been correctly received in the SPS PDSCH of the nⱼ SPS configurations corresponding to the j^{th} HARQ-ACK feedback time unit. If the terminal device does not receive data correctly on the SPS PDSCHs of the nⱼ SPS configurations, the terminal device feeds back HARQ-ACK of nⱼ bits: nⱼ NACKs to the network device through the j^{th} HARQ-ACK feedback time unit, to indicate that no data is correctly received in the SPS PDSCHs of the nⱼ SPS configurations corresponding to the j^{th} HARQ-ACK feedback time unit. Thus, the reliability of the uplink transmission of the terminal device is improved.

Exemplarily, the terminal device may also perform an operation of "OR" on the HARQ-ACKs of the SPS configurations corresponding to the same HARQ-ACK feedback time unit, that is, as long as at least one SPS PDSCH in the SPS configurations corresponding to the same HARQ-ACK feedback time unit correctly receives data, the terminal device feeds back ACK. NACK is fed back only if all SPS PDSCHs in the SPS configurations corresponding to the same HARQ-ACK feedback time unit have not received data correctly.

For example, as shown in (1) in FIG. 16, the SPS PDSCH of SPS configuration 7 carries data, and the terminal device correctly receives data in the SPS PDSCH of SPS configuration 7. Since the terminal device does not receive data correctly in the SPS PDSCHs of the first four SPS configurations (there is no data on the SPS PDSCHs of the first four SPS configurations), the terminal device generates HARQ-ACK of 4 bits in the first HARQ-ACK feedback time unit 1001: NACK, NACK, NACK, NACK; since the terminal device does not receive data correctly in the SPS PDSCHs of SPS configuration 5 and SPS configuration 6, and correctly receives data in the SPS PDSCH of SPS configuration 7, then in the second HARQ-ACK feedback time unit 1002, the terminal device generates HARQ-ACK of 3 bits: ACK, ACK, ACK, and sends two HARQ-ACKs of the two HARQ-ACK feedback time units: NACK, NACK, NACK, NACK and ACK, ACK, ACK to the network device. As shown in (2) in FIG. 16, the SPS PDSCH of SPS configuration 4 carries data, and the terminal device correctly receives data in the SPS PDSCH of SPS configuration 4, but does not correctly receive data in the SPS PDSCHs of the first 3 SPS configurations, then the terminal device generates HARQ-ACK of 4 bits in the first HARQ-ACK feedback time unit 1001: ACK, ACK, ACK, ACK; since the terminal device does not receive data correctly in the SPS PDSCHs of the last three SPS configurations, then the terminal device generates HARQ-ACK of 3 bits in the second HARQ-ACK feedback time unit 1002: NACK, NACK, NACK, and sends two HARQ-ACKs of the two HARQ-ACK feedback time units to the network device: ACK, ACK, ACK, ACK and NACK, NACK, NACK.

To sum up, in the method provided in this embodiment, the terminal device generates HARQ-ACK of nⱼ bits at the j^{th} HARQ-ACK feedback time unit according to whether data is correctly received on the SPS PDSCH of at least one SPS configuration corresponding to the j^{th} HARQ-ACK feedback time unit. If the terminal device receives the data correctly, it feeds back nⱼ ACKs to the network device through the j^{th} HARQ-ACK feedback time unit, and if the terminal device does not receive the data, it feeds back nⱼ NACKs to the network device through the HARQ-ACK feedback time unit. Thus, the reliability of uplink transmission is improved.

### Exemplary embodiment for the sixth situation.

That is, the SPS configurations of the same HARQ-ACK group feed back HARQ-ACK through different HARQ-ACK feedback time units, nₖ bits of feedback information bit are occupied in the last HARQ-ACK feedback time unit, and the HARQ-ACK is only fed back in the last HARQ-ACK feedback time unit, where nₖ is the number of SPS configurations corresponding to the last HARQ-ACK feedback time unit.

FIG. 17 shows a flowchart of a feedback method for semi-persistent scheduling provided by an exemplary embodiment of the present application. The method can be applied to the terminal device in the communication system shown in FIG. 1. Based on the exemplary embodiment shown in FIG. 5, step 506 is further included before step 406, and step 406 further includes step 4066.

There are activated n SPS configurations corresponding to the second HARQ-ACK group; the n SPS configurations of the second HARQ-ACK group correspond to K HARQ-ACK feedback time units, where K is a positive integer; the K^{th} HARQ-ACK feedback time unit corresponds to nₖ bits of feedback information bit, the second HARQ-ACK group corresponds to nₖ bits of feedback information bit in total, nₖ is the number of SPS configurations corresponding to the K^{th} HARQ-ACK feedback time unit, and n and K are positive integers, nₖ is a positive integer less than or equal to n; exemplarily, the terminal device receives data on the SPS PDSCH corresponding to n SPS configurations, and feeds back HARQ-ACK to the network device within K HARQ-ACK feedback time units corresponding to the n SPS configurations.

**In step 506:** the terminal device generates HARQ-ACK of nₖ bits with the same value according to the reception situations of the SPS PDSCHs with valid data transmission in the n SPS PDSCHs corresponding to the n SPS configurations, where n is a positive integer, and nₖ is a positive integer less than or equal to n; or, the terminal device generates HARQ-ACK of nₖ bits with the same value according to the logical OR result of the reception situations on the n SPS PDSCHs corresponding to the n SPS configurations, where n is a positive integer, and nₖ is a positive integer less than or equal to n.

**In step 4066:** the terminal device receives data on at least one SPS PDSCH corresponding to the n SPS configurations, and feeds back the HARQ-ACK to the network device through nₖ bits of feedback information bit of K^{th} HARQ-ACK feedback time unit corresponding to the n SPS configurations.

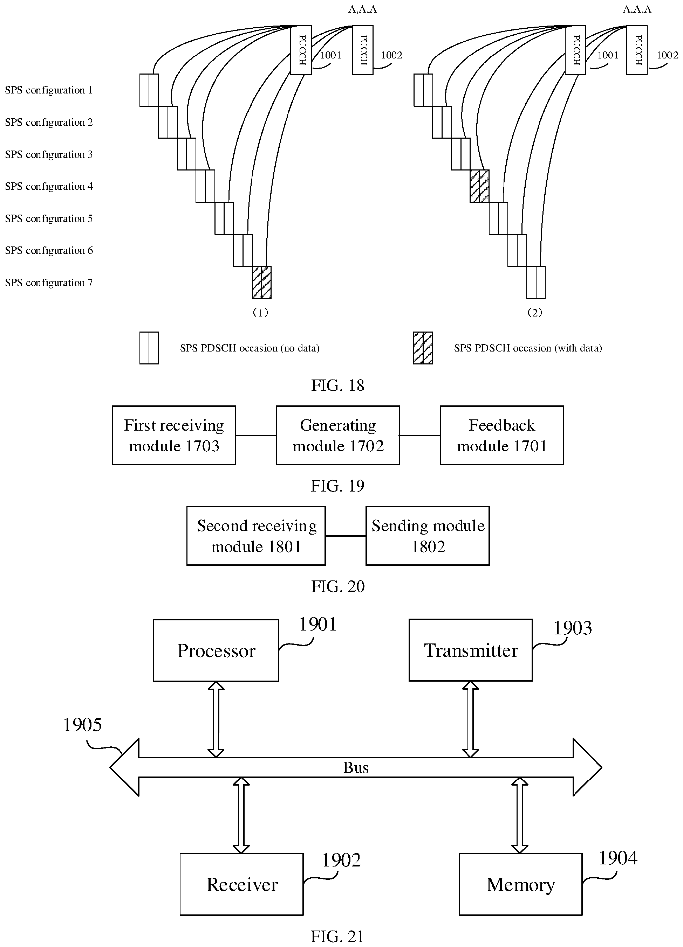

For example, as shown in FIG. 18, the network device divides 7 SPS configurations into the same HARQ-ACK group, then n is 7, and the SPS configurations in this group correspond to two HARQ-ACK feedback time units: the first HARQ-ACK feedback time unit 1001 and the second HARQ-ACK feedback time unit 1002, that is, K is set to 2. Among them, SPS configuration 1, SPS configuration 2, SPS configuration 3 and SPS configuration 4 correspond to the first HARQ-ACK feedback time unit 1001; SPS configuration 5, SPS configuration 6 and SPS configuration 7 correspond to the second HARQ-ACK feedback time unit 1002. That is, 4 SPS configurations correspond to the first HARQ-ACK feedback time unit; 3 SPS configurations correspond to the second HARQ-ACK feedback time unit. The terminal device only feeds back the data reception situations on the SPS PDSCHs of 7 SPS configurations to the network device through the second HARQ-ACK feedback time unit with HARQ-ACK of 3 bits.

Exemplarily, the terminal device determines the HARQ-ACK on the K^{th} HARQ-ACK feedback time unit (the last HARQ-ACK feedback time unit) according to the data reception situations in the n SPS configurations of one HARQ-ACK group. If the terminal device correctly receives data on at least one SPS PDSCH in the n SPS configurations, the terminal device feeds back HARQ-ACK of nₖ bits: nₖ ACKs to the network device through the K^{th} HARQ-ACK feedback time unit, to indicate correct reception of data. If the terminal device does not receive data correctly on the SPS PDSCHs of the n SPS configurations, the terminal device feeds back HARQ-ACK of nₖ bits: nₖ NACKs to the network device through the K^{th} HARQ-ACK feedback time unit, to indicate that data was not received correctly. Thus, the reliability of uplink transmission is improved.

Exemplarily, the terminal device may also perform an operation of "OR" on the HARQ-ACKs of the SPS configurations of the same HARQ-ACK group, that is, as long as at least one SPS PDSCH in the SPS configurations of the same HARQ-ACK group receives data correctly, the terminal device will feed back ACK. NACK is fed back only if all SPS PDSCHs in the SPS configurations of the same HARQ-ACK group have not received data correctly.

For example, as shown in (1) in FIG. 18, the SPS PDSCH of SPS configuration 7 carries data, and the terminal device correctly receives data in the SPS PDSCH of SPS configuration 7. The terminal device receives data correctly in the SPS PDSCH of SPS configuration 7, and does not receive data correctly in the SPS PDSCH of the other 6 SPS configurations, then the terminal device generates HARQ-ACK of 3 bits in the second HARQ-ACK feedback time unit 1002: ACK, ACK, ACK, and sends HARQ-ACK: ACK, ACK, ACK to the network device. As shown in (2) in FIG. 14, the SPS PDSCH of SPS configuration 4 carries data, and the terminal device correctly receives data in the SPS PDSCH of SPS configuration 4, but does not correctly receive data in the SPS PDSCH of the other 6 SPS configurations, then, the terminal device generates 3-bit HARQ-ACK: ACK, ACK, ACK in the second HARQ-ACK feedback time unit 1002, and sends HARQ-ACK: ACK, ACK, ACK to the network device.

To sum up, in the method provided in this embodiment, the terminal device generates HARQ-ACK of nₖ bits in the last HARQ-ACK feedback time unit according to whether data is correctly received on the SPS PDSCHs of the SPS configurations of the same HARQ-ACK group. If the terminal device receives the data correctly, it will feed back nₖ ACKs to the network device through the last HARQ-ACK feedback time unit. If the terminal device does not receive the data correctly, it will feed back nₖ NACKs to the network device through the last HARQ-ACK feedback time unit. Therefore, the reliability of uplink transmission is improved.

Exemplarily, the HARQ-ACK feedback (bit mapping) of the SPS PDSCH in this application is shown in Table 3:

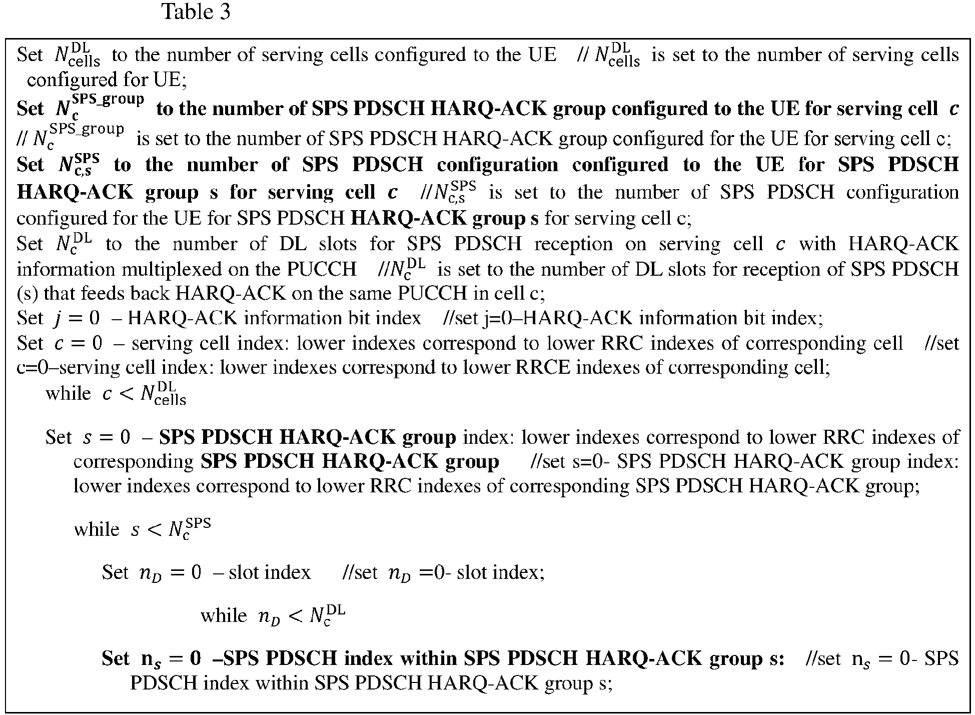

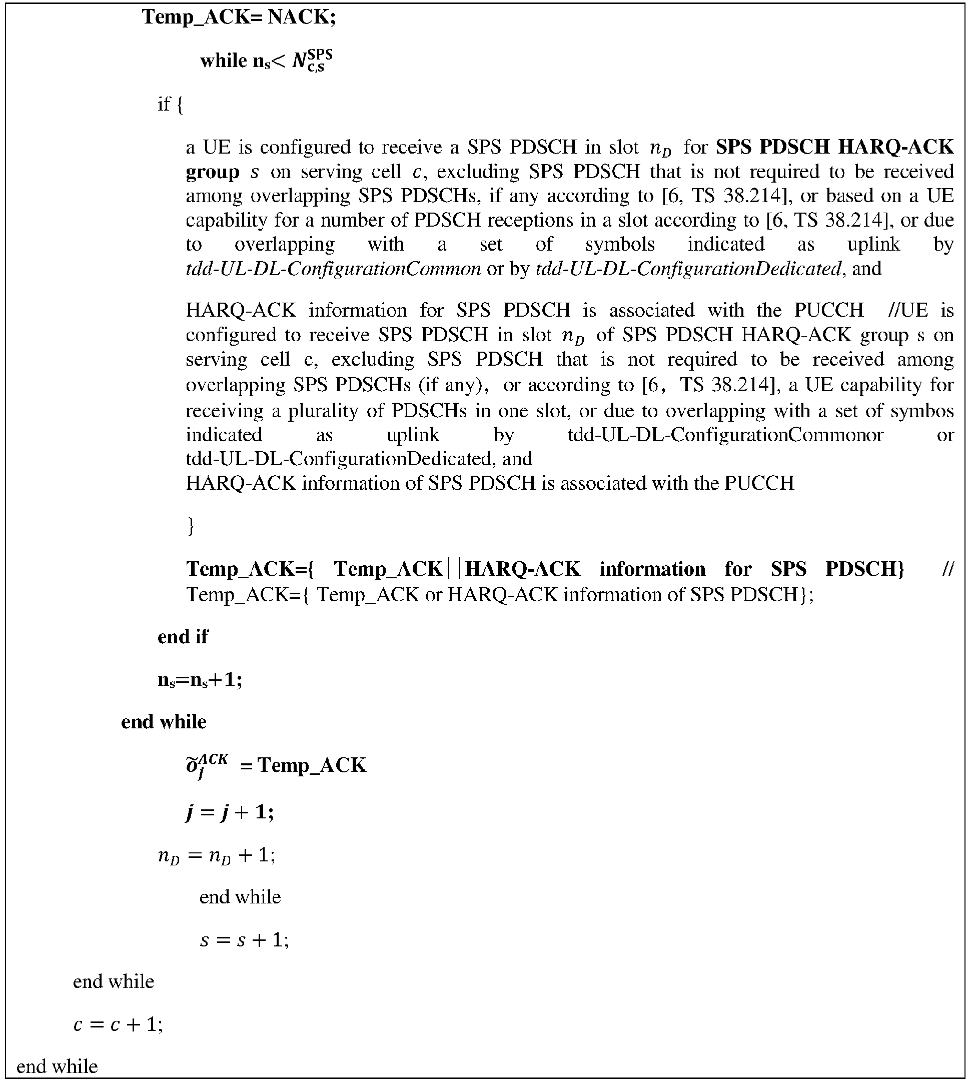

FIG. 19 shows a structural block diagram of a feedback apparatus for semi-persistent scheduling provided by another exemplary embodiment of the present application, and the apparatus may be implemented as a terminal device, or a functional component in the terminal device. The apparatus includes:
a first receiving module 1720, configured to receive at least one semi-persistent scheduling (SPS) activation instruction sent by a network device, where the SPS activation instruction is used for activating at least one SPS configuration in one or more SPS configurations configured for the terminal device; each of the one or more SPS configurations corresponds to one hybrid automatic repeat request-acknowledgement (HARQ-ACK) group;
where the first receiving module 1720 is further configured to receive data on an SPS PDSCH corresponding to the at least one SPS configuration;
a feedback module 1740, configured to feed back an HARQ-ACK to the network device according to the HARQ-ACK group corresponding to the at least one SPS configuration.

In a possible design of this embodiment, the first receiving module 1720 is further configured to receive one or more pieces of SPS configuration information corresponding to the one or more SPS configurations, each piece of SPS configuration information corresponds to one SPS configuration, and each piece of SPS configuration information includes group information of the HARQ-ACK group corresponding to the SPS configuration.

In a possible design of this embodiment, there are activated n SPS configurations corresponding to a first HARQ-ACK group; and the n SPS configurations of the first HARQ-ACK group correspond to the same HARQ-ACK feedback time unit, where n is a positive integer;
the first receiving module 1720 is further configured to receive data on at least one SPS PDSCH corresponding to the n SPS configurations;
the feedback module 1740 is further configured to feed back the HARQ-ACK to the network device within the HARQ-ACK feedback time unit corresponding to the n SPS configurations.

In a possible design of this embodiment, the first HARQ-ACK group corresponds to 1 bit of feedback information bit, and n is a positive integer;
the first receiving module 1720 is further configured to receive data on at least one SPS PDSCH corresponding to the n SPS configurations;
the feedback module 1740 is further configured to feed back the HARQ-ACK to the network device through the 1 bit of feedback information bit of the first HARQ-ACK group corresponding to the n SPS configurations. 37. The apparatus according to claim 36, further including:
a generating module 1760, configured to generate HARQ-ACK of 1 bit according to reception situations of SPS PDSCHs where valid data transmission occurs in n SPS PDSCHs corresponding to the n SPS configurations, where n is a positive integer;
   or,
the generating module 1760 is further configured to generate HARQ-ACK of 1 bit according to a logical OR result of reception situations on the n SPS PDSCHs corresponding to the n SPS configurations, where n is a positive integer.

In a possible design of this embodiment, the first HARQ-ACK group corresponds to n bits of feedback information bit, and n is a positive integer;
the first receiving module 1720 is further configured to receive data on at least one SPS PDSCH corresponding to the n SPS configurations;
the feedback module 1740 is further configured to feed back the HARQ-ACK to the network device through n bits of feedback information bit of the first HARQ-ACK group corresponding to the n SPS configurations.

In a possible design of this embodiment, the generating module 1760 is configured to generate HARQ-ACK of n bits with the same value according to the reception situations of the SPS PDSCH on which valid data transmission occurs in the n SPS PDSCH corresponding to the n SPS configurations, n is a positive integer; or, the generating module 1760 is further configured to generate HARQ-ACK of n bits with the same value according to a logical OR result of the reception situations on the n SPS PDSCHs corresponding to the n SPS configurations, n is a positive integer.

In a possible design of this embodiment, activated n SPS configurations correspond to the second HARQ-ACK group; the n SPS configurations in the second HARQ-ACK group correspond to K HARQ-ACK feedback time units, K is a positive integer;
the first receiving module 1720 is further configured to receive data on the SPS PDSCH corresponding to the n SPS configurations;
the feedback module 1740 is further configured to feed back the HARQ-ACK to the network device within the K HARQ-ACK feedback time units corresponding to the n SPS configurations.

In a possible design of this embodiment, each HARQ-ACK feedback time unit corresponds to 1 bit of feedback information bit, the second HARQ-ACK group corresponds to K bits of feedback information bit in total, and n and K are positive integers;
the first receiving module 1720 is further configured to receive data on at least one SPS PDSCH corresponding to the n SPS configurations;
the feedback module 1740 is further configured to feed back the HARQ-ACK to the network device through the K bits of feedback information bit of the K HARQ-ACK feedback time units corresponding to the n SPS configurations.

In a possible design of this embodiment, the apparatus further includes:
a generating module 1760, configured to generate HARQ-ACK of 1 bit corresponding to the j^{th} HARQ-ACK feedback time unit according to reception situations of SPS PDSCH on which valid data transmission occurs in the nⱼ SPS PDSCHs of the nⱼ SPS configurations corresponding to the j^{th} HARQ-ACK feedback time unit, and generate HARQ-ACK of 1 bit corresponding to the j^{th} HARQ-ACK feedback time unit; generate HARQ-ACK of K bits corresponding to K HARQ-ACK feedback time units, where nⱼ is a positive integer less than or equal to n, and j is a positive integer less than or equal to K;
   or,
the generating module 1760 is further configured to generate HARQ-ACK of 1 bit corresponding to the j^{th} HARQ-ACK feedback time unit according to the logical OR result of the reception situations on the nⱼ SPS PDSCHs of the nⱼ SPS configurations corresponding to the j^{th} HARQ-ACK feedback time unit; generate HARQ-ACK of K bits corresponding to K HARQ-ACK feedback time units, where nⱼ is a positive integer less than or equal to n, j is a positive integer less than or equal to K.

In a possible design of this embodiment, the K^{th} HARQ-ACK feedback time unit corresponds to 1 bit of feedback information bit, the second HARQ-ACK group corresponds to 1 bit of feedback information bit in total, and n and K are positive integers;
the first receiving module 1720 is further configured to receive data on at least one SPS PDSCH corresponding to the n SPS configurations;
the feedback module 1740 is further configured to feed back the HARQ-ACK to the network device through the 1 bit of feedback information bit of the K^{th} HARQ-ACK feedback time unit corresponding to the n SPS configurations.

In a possible design of this embodiment, the apparatus further includes:
a generating module 1760, configured to generate HARQ-ACK of 1 bit according to the reception situations of the SPS PDSCHs where valid data transmission occurs on the n SPS PDSCHs corresponding to the n SPS configurations, where n is a positive integer;
   or,
the generating module 1760 is further configured to generate the HARQ-ACK of 1 bit according to the logical OR result of the reception situations on the n SPS PDSCHs corresponding to the n SPS configurations, where n is a positive integer.

In a possible design of this embodiment, the j^{th} HARQ-ACK feedback time unit corresponds to nⱼ bits of feedback information bit, the second HARQ-ACK group corresponds to n bits of feedback information bit in total, and nⱼ is the number of SPS configurations corresponding to the j^{th} HARQ-ACK feedback time units, n is a positive integer, nⱼ is a positive integer less than or equal to n, and j is a positive integer less than or equal to K;
the first receiving module 1720 is further configured for the terminal device to receive data on at least one SPS PDSCH corresponding to the n SPS configurations;
the feedback module 1740 is configured to feed back the HARQ-ACK to the network device through the n bits of feedback information bit of the K HARQ-ACK feedback time units corresponding to the n SPS configurations.

In a possible design of this embodiment, the apparatus further includes:
a generating module 1760, configured to generate HARQ-ACK of nⱼ bits with the same value corresponding to the j^{th} HARQ-ACK feedback time unit according to the reception situations of the SPS PDSCHs in which valid data transmission occurs on the nⱼ SPS PDSCHs of the nⱼ SPS configurations corresponding to the j^{th} HARQ-ACK feedback time unit; generate n bits of HARQ-ACK corresponding to K HARQ-ACK feedback time units, where n and K are positive integers, nⱼ is a positive integer less than or equal to n, and j is a positive integer less than or equal to K;
   or,
the generating module 1760 is further configured to generate HARQ-ACK of nⱼ bits with the same value corresponding to the j^{th} HARQ-ACK feedback time unit according to the logical OR result of the reception situations on the nⱼ SPS PDSCHs of the nⱼ SPS configurations corresponding to the j^{th} HARQ-ACK feedback time unit; generate HARQ-ACK of n bits corresponding to K HARQ-ACK feedback time units, where n and K are positive integers, nⱼ is a positive integer less than or equal to n, and j is a positive integer less than or equal to K.

In a possible design of this embodiment, the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, where n and K are positive integers, and nₖ is a positive integer less than or equal to n;
the first receiving module 1720 is further configured to receive data on at least one SPS PDSCH corresponding to the n SPS configurations;
the feedback module 1740 is further configured to feed back the HARQ-ACK to the network device through the nₖ bits of feedback information bit of the K^{th} HARQ-ACK feedback time unit corresponding to the n SPS configurations.

In a possible design of this embodiment, the generating module 1760 is configured for the terminal device to generate HARQ-ACK of nₖ bits with the same value according to the reception situations of SPS PDSCHs in which valid data transmission occurs on the n SPS PDSCHs corresponding to the n SPS configurations, where n is a positive integer, and nₖ is a positive integer less than or equal to n; or, the generating module 1760 is further configured for the terminal device to generate HARQ-ACK of nₖ bits with the same value according to the logical OR result of the reception situations on the n SPS PDSCHs corresponding to the n SPS configurations, where n is a positive integer, and nₖ is a positive integer less than or equal to n.

FIG. 20 shows a structural block diagram of a feedback apparatus for semi-persistent scheduling provided by another exemplary embodiment of the present application, and the apparatus may be implemented as a network device, or a functional component in a network device. The apparatus includes:
a sending module 1820, configured to send at least one semi-persistent scheduling (SPS) activation instruction to the terminal device, where the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
the sending module 1820 is further configured to send data to the terminal device on the SPS PDSCH corresponding to the at least one SPS configuration;
a second receiving module 1840, further configured to receive the HARQ-ACK fed back by the terminal device, where the HARQ-ACK is fed back by the terminal device according to the HARQ-ACK group corresponding to the at least one SPS configuration.

In a possible design of this embodiment, the sending module 1820 is further configured to send one or more pieces of SPS configuration information corresponding to the one or more SPS configurations, each piece of SPS configuration information corresponds to one SPS configuration, and each piece of SPS configuration information includes group information of the HARQ-ACK group corresponding to the SPS configuration.

In a possible design of this embodiment, activated n SPS configurations correspond to the first HARQ-ACK group; the n SPS configurations in the first HARQ-ACK group correspond to the same HARQ-ACK feedback time unit, n is a positive integer;
the HARQ-ACK is fed back by the terminal device to the network device within the HARQ-ACK feedback time unit corresponding to the n SPS configurations after receiving data on at least one SPS PDSCH corresponding to the n SPS configurations.

In a possible design of this embodiment, the first HARQ-ACK group corresponds to 1 bit of feedback information bit, and n is a positive integer;
the HARQ-ACK is fed back by the terminal device to the network device through the 1 bit of feedback information bit of the first HARQ-ACK group corresponding to the n SPS configurations after receiving data on at least one SPS PDSCH corresponding to the n SPS configurations.

In a possible design of this embodiment, the HARQ-ACK is HARQ-ACK of 1 bit generated by the terminal device according to the reception situations of SPS PDSCHs in which valid data transmission occurs on the n SPS PDSCHs corresponding to the n SPS configurations, where n is a positive integer; or, the HARQ-ACK is HARQ-ACK of 1 bit generated by the terminal device according to the logical OR result of the reception situations on the n SPS PDSCHs corresponding to the n SPS configurations, where n is a positive integer.

In a possible design of this embodiment, the first HARQ-ACK group corresponds to n bits of feedback information bit, and n is a positive integer; the HARQ-ACK is fed back to the network device by the terminal device through the n bits of feedback information bit of the first HARQ-ACK group corresponding to the n SPS configurations after receiving data on at least one SPS PDSCH corresponding to the n SPS configurations.

In a possible design of this embodiment, the HARQ-ACK is HARQ-ACK of n bits with the same value generated by the terminal device according to the reception situation of SPS PDSCH on which valid data transmission occurs in the n SPS PDSCHs corresponding to the n SPS configurations, where n is a positive integer; or, the HARQ-ACK is HARQ-ACK of n bits with the same value generated by the terminal device according to the logical OR result of the reception situations on the n SPS PDSCHs corresponding to the n SPS configurations, where n is a positive integer.

In a possible design of this embodiment, activated n SPS configurations corresponding to the second HARQ-ACK group; and the n SPS configurations in the second HARQ-ACK group correspond to K HARQ-ACK feedback time units, where K is a positive integer;

The HARQ-ACK is fed back by the terminal device to the network device within the K HARQ-ACK feedback time units corresponding to the n SPS configurations after receiving the data on the SPS PDSCHs corresponding to the n SPS configurations.

In a possible design of this embodiment, each HARQ-ACK feedback time unit corresponds to 1 bit of feedback information bit, and the second HARQ-ACK group corresponds to K bits of feedback information bit in total, where n and K are positive integers;
the HARQ-ACK is fed back by the terminal device to the network device through K bits of feedback information bit of the K HARQ-ACK feedback time units corresponding to the n SPS configurations after receiving data on at least one SPS PDSCH corresponding to the n SPS configurations.

In a possible design of this embodiment, the HARQ-ACK is HARQ-ACK of 1 bit corresponding to the j^{th} HARQ-ACK feedback time unit generated by the terminal device according to the reception situation of the SPS PDSCH on which valid data transmission occurs in the nⱼ SPS PDSCHs of the nⱼ SPS corresponding to the j^{th} HARQ-ACK feedback time unit; HARQ-ACK of K bits corresponding to the K HARQ-ACK feedback time units are totally generated, where nⱼ is a positive integer less than or equal to n, j is a positive integer less than or equal to K; or, the HARQ-ACK is HARQ-ACK of 1 bit corresponding to the j^{th} HARQ-ACK feedback time unit generated by the terminal device according to the logical OR result of the reception situations on the nⱼ SPS PDSCHs of the nⱼ SPS configurations corresponding to the j^{th} HARQ-ACK feedback time unit; HARQ-ACK of K bits corresponding to the HARQ-ACK of K bits feedback time units are totally generated, where nⱼ is less than or equal to n, and j is a positive integer less than or equal to K.

In a possible design of this embodiment, the K^{th} HARQ-ACK feedback time unit corresponds to 1 bit of feedback information bit, the second HARQ-ACK group corresponds to 1 bit of feedback information bit in total, and n and K are positive integers;
the HARQ-ACK is fed back to the network device by the terminal device through the 1 bit of feedback information bit of the K^{th} HARQ-ACK feedback time unit corresponding to the n SPS configurations after receiving data on at least one SPS PDSCH corresponding to the n SPS configurations.

In a possible design of this embodiment, the HARQ-ACK is HARQ-ACK of 1 bit generated by the terminal device according to the reception situation of SPS PDSCH on which valid data transmission occurs in n SPS PDSCHs corresponding to the n SPS configurations, where n is a positive integer; or, the HARQ-ACK is HARQ-ACK of 1 bit generated by the terminal device according to a logical OR result of the reception situations on the n SPS PDSCHs corresponding to the n SPS configurations, where n is a positive integer.

In a possible design of this embodiment, the j^{th} HARQ-ACK feedback time unit corresponds to nⱼ feedback information bit, the second HARQ-ACK group corresponds to n bits of feedback information bit in total, and nⱼ is the number of SPS configurations corresponding to j^{th} HARQ-ACK feedback time unit, n is a positive integer, nⱼ is a positive integer less than or equal to n, and j is a positive integer less than or equal to K; the HARQ-ACK is fed back to the network device by the terminal device through n bits of feedback information bit of the K HARQ-ACK feedback time units corresponding to the n SPS configurations after receiving the data on at least one SPS PDSCH corresponding to the n SPS configurations.

In a possible design of this embodiment, the HARQ-ACK is HARQ-ACK of nⱼ bits with the same value corresponding to the j^{th} HARQ-ACK feedback time unit generated by the terminal device according to the reception situation of SPS PDSCH in which valid data transmission occurs in nⱼ SPS PDSCHs of nⱼ SPS configurations corresponding to the j^{th} HARQ-ACK feedback time unit; HARQ-ACK of n bits corresponding to K HARQ-ACK feedback time units in total are generated totally, where n and K are positive integers, nⱼ is a positive integer less than or equal to n, and j is a positive integer less than or equal to K; or, the HARQ-ACK is HARQ-ACK of n bits with the same value corresponding to the j^{th} HARQ-ACK feedback time unit according to the logical OR result of the reception situations on the nⱼ SPS PDSCHs of the nⱼ SPS configurations corresponding to the j^{th} HARQ-ACK feedback time unit; HARQ-ACK of n bits corresponding to the the K HARQ-ACK feedback time units in total are generated totally, where n and K are positive integers, nⱼ is a positive integer less than or equal to n, and j is a positive integer less than or equal to K.

In a possible design of this embodiment, the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, where n and K are positive integers, and nₖ is a positive integer less than or equal to n; the HARQ-ACK is fed back to the network device by the terminal device through the nₖ bits of feedback information bit of the K^{th} HARQ-ACK feedback time unit corresponding to the n SPS configurations after receiving the data on at least one SPS PDSCH corresponding to the n SPS configurations.

In a possible design of this embodiment, the HARQ-ACK is HARQ-ACK of nₖ bits with the same value generated by the terminal device according to the reception situation of SPS PDSCH on which valid data transmission occurs in the n SPS PDSCHs corresponding to the n SPS configurations, where n is a positive integer, nₖ is a positive integer less than or equal to n; or, the HARQ-ACK is HARQ-ACK of nₖ bits with the same value generated by the terminal device according to the logical OR result of the reception situations on the n SPS PDSCH corresponding to the n SPS configurations, where n is a positive integer, and nₖ is a positive integer less than or equal to n.

FIG. 21 shows a schematic structural diagram of a terminal device provided by an exemplary embodiment of the present application. The terminal device includes: a processor 1901, a receiver 1902, a transmitter 1903, a memory 1904, and a bus 1905.

The processor 1901 includes one or more processing cores, and the processor 1901 executes various functional applications and information processing by running software programs and modules.

The receiver 1902 and the transmitter 1903 may be implemented as one communication component, which may be a communication chip.

The memory 1904 is connected to the processor 1901 through a bus 1905.

The memory 1904 may be used to store at least one instruction, and the processor 1901 may be used to execute the at least one instruction.

The receiver 1902 is configured to receive at least one SPS activation instruction sent by a network device, where the SPS activation instruction is used for activating at least one SPS configuration in one or more SPS configurations configured for the terminal device; each SPS configuration in the one or more SPS configurations corresponds to one HARQ-ACK group;
the receiver 1902 is configured to receive data on the SPS PDSCH corresponding to the at least one SPS configuration, and feed back HARQ-ACK to the network device according to the HARQ-ACK group corresponding to the at least one SPS configuration.

In a possible design of this embodiment, the receiver 1902 is configured to receive one or more pieces of SPS configuration information corresponding to the one or more SPS configurations, each piece of SPS configuration information corresponds to one SPS configuration, and each SPS configuration includes group information of the HARQ-ACK group corresponding to the SPS configuration.

In a possible design of this embodiment, activated n SPS configurations correspond to the first HARQ-ACK group; and the n SPS configurations of the first HARQ-ACK group correspond to the same HARQ-ACK feedback time unit, where n is a positive integer;
the receiver 1902 is configured to receive data on at least one SPS PDSCH corresponding to the n SPS configurations;
the transmitter 1903 is configured to feed back the HARQ-ACK to the network device within the HARQ-ACK feedback time unit corresponding to the n SPS configurations.

In a possible design of this embodiment, the first HARQ-ACK group corresponds to 1 bit of feedback information bit, and n is a positive integer;
the receiver 1902 is configured to receive data on at least one SPS PDSCH corresponding to the n SPS configurations; the transmitter 1903 is configured to feed back the HARQ-ACK to the network device through the 1 bit of feedback information bit of the first HARQ-ACK group corresponding to the n SPS configurations.

In a possible design of this embodiment, the processor 1901 is configured to generate HARQ-ACK of 1 bit according to the reception situation of the SPS PDSCH on which valid data transmission occurs in the n SPS PDSCHs corresponding to the n SPS configurations, where n is a positive integer; or, the processor 1901 is configured to generate HARQ-ACK of 1 bit according to a logical OR result of the reception situations on the n SPS PDSCHs corresponding to the n SPS configurations, where n is a positive integer.

In a possible design of this embodiment, the first HARQ-ACK group corresponds to n bits of feedback information bit, and n is a positive integer;
the receiver 1902 is configured to receive data on at least one SPS PDSCH corresponding to the n SPS configurations, and the transmitter 1903 is configured to feed back the HARQ-ACK to the network device through the n bits of feedback information bit of the first HARQ-ACK group corresponding to the n SPS configurations.

In a possible design of this embodiment, the processor 1901 is configured to generate HARQ-ACK of n bits with the same value according to the reception situation of the SPS PDSCH on which valid data transmission occurs in the n SPS PDSCHs corresponding to the n SPS configurations, where n is a positive integer; or, the processor 1901 is configured to generate HARQ-ACK of n bits with the same value according to the logical OR result of the reception situations on the n SPS PDSCHs corresponding to the n SPS configurations, where n is a positive integer.

In a possible design of this embodiment, activated n SPS configurations correspond to the second HARQ-ACK group; and the n SPS configurations of the second HARQ-ACK group correspond to K HARQ-ACK feedback time units, where K is a positive integer;
the receiver 1902 is configured to receive data on the SPS PDSCH corresponding to the n SPS configurations. The transmitter 1903 is configured to feed back the HARQ-ACK to the network device within the K HARQ-ACK feedback time units corresponding to the n SPS configurations.

In a possible design of this embodiment, each HARQ-ACK feedback time unit corresponds to 1 bit of feedback information bit, and the second HARQ-ACK group corresponds to K bits of feedback information bit in total, where n and K are positive integers;
the receiver 1902 is configured to receive data on at least one SPS PDSCH corresponding to the n SPS configurations. The transmitter 1903 is configured to feed back the HARQ-ACK to the network device through the K bits of feedback information bit of the K HARQ-ACK feedback time units corresponding to the n SPS configurations.

In a possible design of this embodiment, the processor 1901 is configured to generate HARQ-ACK of 1 bit corresponding to the j^{th} HARQ-ACK feedback time unit according to the reception situation of the SPS PDSCH on which valid data transmission occurs in the nⱼ SPS PDSCHs of the nⱼ SPS configurations corresponding to the j^{th} HARQ-ACK feedback time unit; generate HARQ-ACK of K bits corresponding to the K HARQ-ACK feedback time units, where nⱼ is a positive integer less than or equal to n, and j is a positive integer less than or equal to K; or, the processor 1901 is configured to generate HARQ-ACK of 1 bit corresponding to the j^{th} HARQ-ACK feedback time unit according to the logical OR result of reception situations of the nⱼ SPS PDSCHs of the nⱼ SPS configurations corresponding to the j^{th} HARQ-ACK feedback time unit; generate HARQ-ACK of K bits corresponding to K HARQ-ACK feedback time units, where nⱼ is a positive integer less than or equal to n, and j is a positive integer less than or equal to K.

In a possible design of this embodiment, the K^{th} HARQ-ACK feedback time unit corresponds to 1 bit of feedback information bit, and the second HARQ-ACK group corresponds to 1 bit of feedback information bit in total, where n and K are positive integers;
the receiver 1902 is configured to receive data on at least one SPS PDSCH corresponding to the n SPS configurations, and feed back the HARQ-ACK to the network device through 1 bit of feedback information bit of the K^{th} HARQ-ACK feedback time unit corresponding to the n SPS configurations.

In a possible design of this embodiment, the processor 1901 is configured to generate HARQ-ACK of 1 bit according to the reception situation of the SPS PDSCH on which valid data transmission occurs in the n SPS PDSCHs corresponding to the n SPS configurations, where n is a positive integer; or, the processor 1901 is configured to generate HARQ-ACK of 1 bit according to the logical OR result of the reception situations on the n SPS PDSCHs corresponding to the n SPS configurations, where n is positive integer.

In a possible design of this embodiment, the j^{th} HARQ-ACK feedback time unit corresponds to nⱼ bits of feedback information bit, the second HARQ-ACK group corresponds to n bits of feedback information bit in total, and nⱼ is the number of SPS configurations corresponding to the j^{th} HARQ-ACK feedback time unit, where n is a positive integer, nⱼ is a positive integer less than or equal to n, and j is a positive integer less than or equal to K;
the receiver 1902 is configured to receive data on at least one SPS PDSCH corresponding to the n SPS configurations, and feed back the HARQ-ACK to the network device through n bits of feedback information bit of the K HARQ-ACK time units corresponding to the n SPS configurations.

In a possible design of this embodiment, the processor 1901 is configured to generate HARQ-ACK of nⱼ bits with the same value corresponding to the j^{th} HARQ-ACK feedback time unit according to the reception situation of SPS PDSCH on which valid data transmission occurs in the nⱼ SPS PDSCHs of the nⱼ SPS configurations corresponding to the j^{th} HARQ-ACK feedback time unit; generate HARQ-ACK of n bits corresponding to the K HARQ-ACK feedback time units in total, where n, K are positive integers, nⱼ is a positive integer less than or equal to n, and j is a positive integer less than or equal to K; or, the processor 1901 is configured to generate HARQ-ACK of nⱼ bits with the same value corresponding to the j^{th} HARQ-ACK feedback time unit according to the logical OR result of the reception situations on the nⱼ SPS PDSCHs of nⱼ SPS configurations corresponding to the j^{th} HARQ-ACK feedback time unit; generate HARQ-ACK of n bits corresponding to K HARQ-ACK feedback time units in total, where n and K are positive integers, nⱼ is a positive integer less than or equal to n, and j is a positive integer less than or equal to K.

In a possible design of this embodiment, the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, where n and K are positive integers, and nₖ is a positive integer less than or equal to n;
the receiver 1902 is configured to receive data on at least one SPS PDSCH corresponding to the n SPS configurations, and feed back the HARQ-ACK to the network device through nₖ bits of feedback information bit of the K^{th} HARQ-ACK feedback time unit corresponding to the n SPS configurations.

In a possible design of this embodiment, the processor 1901 is configured to generate HARQ-ACK of nₖ bits with the same value according to the reception situation of the SPS PDSCH on which valid data transmission occurs in the n SPS PDSCHs corresponding to the n SPS configurations, where n is a positive integer, and nₖ is a positive integer less than or equal to n; or, the processor 1901 is configured to generate HARQ-ACK of nₖ bits having the same value according to the logical OR result of the reception situations on the n SPS PDSCHs corresponding to the n SPS configurations, where n is a positive integer, and nₖ is a positive integer less than or equal to n.

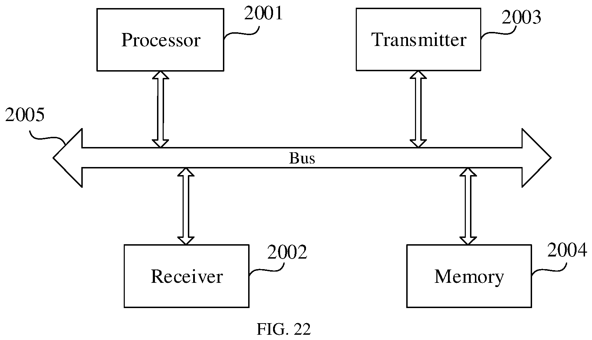

FIG. 22 shows a schematic structural diagram of a terminal device provided by an exemplary embodiment of the present application. The terminal device includes: a processor 2001, a receiver 2002, a transmitter 2003, a memory 2004 and a bus 2005.

The processor 2001 includes one or more processing cores, and the processor 2001 executes various functional applications and information processing by running software programs and modules.

The receiver 2002 and the transmitter 2003 may be implemented as one communication component, which may be a communication chip.

The memory 2004 is connected to the processor 2001 through the bus 2005.

The memory 2004 may be used to store at least one instruction, and the processor 2001 may be used to execute the at least one instruction.

The transmitter 2003 is configured to send at least one semi-persistent scheduling (SPS) activation instruction to the terminal device, where the SPS activation instruction is used for activating at least one SPS configuration in one or more SPS configurations configured for the terminal device; each SPS configuration in the one or more SPS configurations corresponds to one hybrid automatic repeat request-acknowledgement (HARQ-ACK) group;
the transmitter 2003 is configured to send data to the terminal device on the SPS PDSCH corresponding to the at least one SPS configuration;
the receiver 2002 is configured to receive the HARQ-ACK fed back by the terminal device, where the HARQ-ACK is fed back by the terminal device according to the HARQ-ACK group corresponding to the at least one SPS configuration.

In a possible design of this embodiment, the transmitter 2003 is configured to send one or more pieces of SPS configuration information corresponding to the one or more SPS configurations, each piece of SPS configuration information corresponds to one SPS configuration, and each piece of SPS configuration information includes group information of the HARQ-ACK group corresponding to the SPS configuration.

In an exemplary embodiment, a computer-readable storage medium is also provided. The computer-readable storage medium stores at least one instruction, at least one piece of program, code set or instruction set, and the at least one instruction, the at least one piece of program, the code set or the instruction set is loaded and executed by the processor to implement the feedback method for semi-persistent scheduling executed by the terminal device provided by the above method embodiments.

In an exemplary embodiment, there is also provided a computer program product or computer program including computer instructions stored in a computer-readable storage medium. The processor of the computer device reads the computer instructions from the computer-readable storage medium, and the processor executes the computer instructions, so that the computer device executes the above-mentioned feedback method for semi-persistent scheduling described in the above aspects optionally.

In an exemplary embodiment, a chip is also provided, the chip includes a programmable logic circuit and/or program instructions for implementing the feedback method of the semi-persistent scheduling as described in the above aspects when the chip is running.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned may be a read-only memory, a magnetic disk or an optical disk, etc.

The above descriptions are only optional embodiments of the present application, and are not intended to limit the present application. Any modifications, equivalent replacements, improvements, etc. made within the spirit and principles of the present application shall be included in the protection scope of the present application.

## Claims

1. A feedback method for semi-persistent scheduling, the method comprising:
receiving, by a terminal device, at least one semi-persistent scheduling (SPS) activation instruction sent by a network device, wherein the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
receiving data on an SPS PDSCH corresponding to the at least one SPS configuration, and feeding back an HARQ-ACK to the network device according to the HARQ-ACK group corresponding to the at least one SPS configuration, by the terminal device.

2. The method according to claim 1, wherein the method further comprises:
receiving, by the terminal device, one or more pieces of SPS configuration information corresponding to the one or more SPS configurations, wherein each piece of SPS configuration information corresponds to one SPS configuration, and each piece of SPS configuration information comprises group information of the HARQ-ACK group corresponding to the SPS configuration.

3. The method according to claim 1, wherein activated n SPS configurations correspond to a first HARQ-ACK group; the n SPS configurations of the first HARQ-ACK group correspond to a same HARQ-ACK feedback time unit, n is a positive integer;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device within the HARQ-ACK feedback time unit corresponding to the n SPS configurations, by the terminal device.

4. The method according to claim 3, wherein the first HARQ-ACK group corresponds to 1 bit of feedback information bit, and n is a positive integer;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device through the 1 bit of feedback information bit of the first HARQ-ACK group corresponding to the n SPS configurations, by the terminal device.

5. The method according to claim 4, wherein the method further comprises:
generating, by the terminal device, HARQ-ACK of 1 bit according to a reception situation of an SPS PDSCH on which valid data transmission occurs in n SPS PDSCHs corresponding to the n SPS configurations, wherein n is a positive integer;
or,
generating, by the terminal device, HARQ-ACK of 1 bit according to a logical OR result of reception situations on n SPS PDSCHs corresponding to the n SPS configurations, wherein n is a positive integer.

6. The method according to claim 3, wherein the first HARQ-ACK group corresponds to n bits of feedback information bit, and n is a positive integer;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device through the n bits of feedback information bit of the first HARQ-ACK group corresponding to the n SPS configurations, by the terminal device.

7. The method according to claim 6, wherein the method further comprises:
generating, by the terminal device, HARQ-ACK of n bits with a same value according to a reception situation of an SPS PDSCH on which valid data transmission occurs in n SPS PDSCHs corresponding to the n SPS configurations, wherein n is a positive integer;
or,
generating, by the terminal device, HARQ-ACK of n bits with a same value according to a logical OR result of reception situations on n SPS PDSCHs corresponding to the n SPS configurations, wherein n is a positive integer.

8. The method according to claim 1, wherein:
activated n SPS configurations correspond to a second HARQ-ACK group; the n SPS configurations of the second HARQ-ACK group correspond to K HARQ-ACK feedback time units, wherein K is a positive integer;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on the SPS PDSCH corresponding to the n SPS configurations, and feeding back the HARQ-ACK to the network device within the K HARQ-ACK feedback time units corresponding to the n SPS configurations, by the terminal device.

9. The method according to claim 8, wherein each HARQ-ACK feedback time unit corresponds to 1 bit of feedback information bit, the second HARQ-ACK group corresponds to K bits of feedback information bit in total, and n and K are positive integers;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device through the K bits of feedback information bit of the K HARQ-ACK feedback time units corresponding to the n SPS configurations, by the terminal device.

10. The method according to claim 9, wherein the method further comprises:
according to a reception situation of an SPS PDSCH on which valid data transmission occurs in nⱼ SPS PDSCHs of nⱼ SPS configurations corresponding to the j^{th} HARQ-ACK feedback time unit, generating 1 bit HARQ-ACK corresponding to the j^{th} HARQ-ACK feedback time unit; and generating HARQ-ACK of K bits corresponding to the K HARQ-ACK feedback time units, by the terminal device, wherein nⱼ is a positive integer less than or equal to n, and j is a positive integer less than or equal to K;
or,
according to a logical OR result of reception situations on nⱼ SPS PDSCHs of nⱼ SPS configurations corresponding to the j^{th} HARQ-ACK feedback time unit, generating HARQ-ACK of 1 bit corresponding to the j^{th} HARQ-ACK feedback time unit; and generating HARQ-ACK of K bits corresponding to the K HARQ-ACK feedback time units, by the terminal device, wherein nⱼ is a positive integer less than or equal to n, and j is a positive integer less than or equal to K.

11. The method according to claim 8, wherein the K^{th} HARQ-ACK feedback time unit corresponds to 1 bit of feedback information bit, the second HARQ-ACK group corresponds to 1 bit of feedback information bit in total, and n and K are positive integer;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device through the 1 bit of feedback information bit of the K^{th} HARQ-ACK feedback time unit corresponding to the n SPS configurations, by the terminal device.

12. The method according to claim 11, wherein the method further comprises:
generating, by the terminal device, HARQ-ACK of 1 bit according to a reception situation of an SPS PDSCH on which valid data transmission occurs in n SPS PDSCHs corresponding to the n SPS configurations, wherein n is a positive integer;
or,
generating, by the terminal device, HARQ-ACK of 1 bit according to a logical OR result of reception situations on n SPS PDSCHs corresponding to the n SPS configurations, wherein n is a positive integer.

13. The method according to claim 8, wherein the j^{th} HARQ-ACK feedback time unit corresponds to nⱼ bits of feedback information bit, the second HARQ-ACK group corresponds to n bits of feedback information bit in total, and nⱼ is the number of SPS configurations corresponding to the j^{th} HARQ-ACK feedback time unit, wherein n is a positive integer, nⱼ is a positive integer less than or equal to n, and j is a positive integer less than or equal to K;
receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device through the n bits of feedback information bit of the K HARQ-ACK feedback time units corresponding to the n SPS configurations, by the terminal device.

14. The method according to claim 13, wherein the method further comprises:
according to a reception situation of an SPS PDSCH on which valid data transmission occurs in nⱼ SPS PDSCHs of nⱼ SPS configurations corresponding to the j^{th} HARQ-ACK feedback time unit, generating HARQ-ACK of nⱼ bits with a same value corresponding to the j^{th} HARQ-ACK feedback time unit; and generating HARQ-ACK of n bits corresponding to K HARQ-ACK feedback time units in total, by the terminal device, wherein n, K are positive integers, nⱼ is a positive integer less than or equal to n, j is a positive integer less than or equal to K;
or,
according to a logical OR result of reception situations on nⱼ SPS PDSCHs of nⱼ SPS configurations corresponding to the j^{th} HARQ-ACK feedback time unit, generating HARQ-ACK of nⱼ bits with a same value corresponding to the j^{th} HARQ-ACK feedback time unit; and generating HARQ-ACK of n bits corresponding to K HARQ-ACK feedback time units in total, by the terminal device, wherein n and K are positive integers, nⱼ is a positive integer less than or equal to n, and j is a positive integer less than or equal to K.

15. The method according to claim 8, wherein the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, wherein n and K are positive integers, and nₖ is a positive integer less than or equal to n;
the receiving data on the SPS PDSCH corresponding to the at least one SPS configuration, and feeding back HARQ-ACK to the network device according to the HARQ-ACK group corresponding to the at least one SPS configuration, by the terminal device, comprises:
receiving data on at least one SPS PDSCH corresponding to the n SPS configurations, and feeding back the HARQ-ACK to the network device through the nₖ bits of feedback information bit of the K^{th} HARQ-ACK feedback time unit corresponding to the n SPS configurations, by the terminal device.

16. The method according to claim 15, wherein the method further comprises:
generating, by the terminal device, HARQ-ACK of nₖ bits with a same value according to a reception situation of an SPS PDSCH on which valid data transmission occurs in n SPS PDSCHs corresponding to the n SPS configurations, wherein n is a positive integer, and nₖ is a positive integer less than or equal to n;
or,
generating, by the terminal device, HARQ-ACK of nₖ bits with a same value according to a logical OR result of reception situations on n SPS PDSCHs corresponding to the n SPS configurations, wherein n is a positive integer, and nₖ is a positive integer less than or equal to n.

17. A feedback method for semi-persistent scheduling, the method comprising:
sending, by a network device, at least one semi-persistent scheduling (SPS) activation instruction to a terminal device, wherein the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
sending, by the network device, data to the terminal device on an SPS PDSCH corresponding to the at least one SPS configuration;
receiving, by the network device, an HARQ-ACK fed back by the terminal device, wherein the HARQ-ACK is fed back by the terminal device according to the HARQ-ACK group corresponding to the at least one SPS configuration.

18. The method according to claim 17, wherein the method further comprises:
sending, by the network device, one or more pieces of SPS configuration information corresponding to the one or more SPS configurations, wherein each piece of SPS configuration information corresponds to one SPS configuration, and each piece of SPS configuration information comprises group information of the HARQ-ACK group corresponding to the SPS configuration.

19. The method according to claim 17, wherein activated n SPS configurations correspond to a first HARQ-ACK group; the n SPS configurations of the first HARQ-ACK group correspond to a same HARQ-ACK feedback time unit, and n is a positive integer;
the HARQ-ACK is fed back by the terminal device to the network device within the HARQ-ACK feedback time unit corresponding to the n SPS configurations after receiving data on at least one SPS PDSCH corresponding to the n SPS configurations.

20. The method according to claim 19, wherein the first HARQ-ACK group corresponds to 1 bit of feedback information bit, and n is a positive integer;
the HARQ-ACK is fed back by the terminal device to the network device through the 1 bit of feedback information bit of the first HARQ-ACK group corresponding to the n SPS configurations after receiving data on at least one SPS PDSCH corresponding to the n SPS configurations.

21. The method according to claim 20, wherein:
the HARQ-ACK is HARQ-ACK of 1 bit generated by the terminal device according to a reception situation of an SPS PDSCH on which valid data transmission occurs in n SPS PDSCHs corresponding to the n SPS configurations, wherein n is a positive integer;
or,
the HARQ-ACK is HARQ-ACK of 1 bit generated by the terminal device according to a logical OR result of reception situations on n SPS PDSCHs corresponding to the n SPS configurations, wherein n is a positive integer.

22. The method according to claim 19, wherein the first HARQ-ACK group corresponds to n bits of feedback information bit, and n is a positive integer;
the HARQ-ACK is fed back by the terminal device to the network device through n bits of feedback information bit of the first HARQ-ACK group corresponding to the n SPS configurations bit after receiving data on at least one SPS PDSCH corresponding to the n SPS configuration.

23. The method according to claim 22, wherein:
the HARQ-ACK is HARQ-ACK of n bits with a same value generated by the terminal device according to a reception situation of an SPS PDSCH on which valid data transmission occurs in n SPS PDSCHs corresponding to the n SPS configurations, wherein n is positive integer;
or,
the HARQ-ACK is HARQ-ACK of n bits with a same value generated by the terminal device according to a logical OR result of reception situations on n SPS PDSCHs corresponding to the n SPS configurations, wherein n is a positive integer.

24. The method according to claim 17, wherein:
activated n SPS configurations correspond to a second HARQ-ACK group; and the n SPS configurations of the second HARQ-ACK group correspond to K HARQ-ACK feedback time units, wherein K is a positive integer;
the HARQ-ACK is fed back by the terminal device to the network device within the K HARQ-ACK feedback time units corresponding to the n SPS configurations after receiving data on the SPS PDSCH corresponding to the n SPS configurations.

25. The method according to claim 24, wherein each HARQ-ACK feedback time unit corresponds to 1 bit of feedback information bit, the second HARQ-ACK group corresponds to K bits of feedback information bit in total, and n and K are positive integers;
the HARQ-ACK is fed back by the terminal device to the network device through the K bits of feedback information bit of the K HARQ-ACK feedback time units corresponding to the n SPS configurations after receiving data on at least one SPS PDSCH corresponding to the n SPS configurations.

26. The method according to claim 25, wherein:
the HARQ-ACK is HARQ-ACK of 1 bit corresponding to the j^{th} HARQ-ACK feedback time unit generated by the terminal device according to a reception situation of an SPS PDSCH on which valid data transmission occurs in nⱼ SPS PDSCHs of nⱼ SPS configurations corresponding to the j^{th} HARQ-ACK feedback time unit; HARQ-ACK of K bits corresponding to K HARQ-ACK feedback time units are generated in total, nⱼ is a positive integer less than or equal to n, and j is a positive integer less than or equal to K;
or,
the HARQ-ACK is HARQ-ACK of 1 bit corresponding to the j^{th} HARQ-ACK feedback time unit generated by the terminal device according to a logical OR result of reception situations on nⱼ SPS PDSCHs of nⱼ SPS configurations corresponding to the j^{th} HARQ-ACK feedback time unit; HARQ-ACK of K bits corresponding to K HARQ-ACK feedback time units are generated in total, nⱼ is a positive integer less than or equal to n, and j is a positive integer less than or equal to K.

27. The method according to claim 24, wherein the K^{th} HARQ-ACK feedback time unit corresponds to 1 bit of feedback information bit, the second HARQ-ACK group corresponds to 1 bit of feedback information bit in total, and n and K are positive integer;
the HARQ-ACK is fed back by the terminal device to the network device through 1 bit of feedback information bit of the K^{th} HARQ-ACK feedback time unit corresponding to the n SPS configurations after receiving data on at least one SPS PDSCH corresponding to the n SPS configurations.

28. The method according to claim 27, wherein:
the HARQ-ACK is HARQ-ACK of 1 bit generated by the terminal device according to a reception situation of an SPS PDSCH on which valid data transmission occurs in n SPS PDSCHs corresponding to the n SPS configurations, wherein n is a positive integer;
or,
the HARQ-ACK is HARQ-ACK of 1 bit generated by the terminal device according to a logical OR result of reception situations on n SPS PDSCHs corresponding to the n SPS configurations, wherein n is a positive integer.

29. The method according to claim 24, wherein the j^{th} HARQ-ACK feedback time unit corresponds to nⱼ bits of feedback information bit, the second HARQ-ACK group corresponds to n bits of feedback information bit in total, and nⱼ is the number of SPS configurations corresponding to the j^{th} HARQ-ACK feedback time unit, wherein n is a positive integer, nⱼ is a positive integer less than or equal to n, and j is a positive integer less than or equal to K;
the HARQ-ACK is fed back by the terminal device to the network device through n bits of feedback information bit of K HARQ-ACK feedback time units corresponding to the n SPS configurations after receiving data on at least one SPS PDSCH corresponding to the n SPS configurations.

30. The method according to claim 29, wherein:
the HARQ-ACK is HARQ-ACK of nⱼ bits with a same value corresponding to the j^{th} HARQ-ACK feedback time unit generated by the terminal device according to a receiving situation of an SPS PDSCH on which valid data transmission occurs in nⱼ SPS PDSCHs of nⱼ SPS configurations corresponding to the j^{th} HARQ-ACK feedback time unit; HARQ-ACK of n bits corresponding to K HARQ-ACK feedback time units in total are generated in total, n and K are positive integers, nⱼ is a positive integer less than or equal to n, and j is a positive integer less than or equal to K;
or,
the HARQ-ACK is HARQ-ACK of nⱼ bits with a same value corresponding to the j^{th} HARQ-ACK feedback time unit generated by the terminal according to a logical OR result of reception situations on nⱼ SPS PDSCHs of nⱼ SPS configurations corresponding to the j^{th} HARQ-ACK feedback time unit; HARQ-ACK of n bits corresponding to K HARQ-ACK feedback time units in total are generated in total, n and K are positive integers, nⱼ is a positive integer less than or equal to n, and j is a positive integer less than or equal to K.

31. The method according to claim 24, wherein the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, wherein n and K are positive integers, and nₖ is a positive integer less than or equal to n;
the HARQ-ACK is fed back by the terminal device to the network device through nₖ bits of feedback information bit of the K^{th} HARQ-ACK feedback time unit corresponding to the n SPS configurations after receiving data on at least one SPS PDSCH corresponding to the n SPS configurations.

32. The method according to claim 31, wherein:
the HARQ-ACK is HARQ-ACK of nₖ bits with a same value generated by the terminal device according to a reception situation of an SPS PDSCH on which valid data transmission occurs in n SPS PDSCHs corresponding to the n SPS configurations, n is a positive integer, and nₖ is a positive integer less than or equal to n;
or,
the HARQ-ACK is HARQ-ACK of nₖ bits with a same value generated by the terminal device according to a logical OR result of reception situations on n SPS PDSCHs corresponding to the n SPS configurations, n is a positive integer, and nₖ is a positive integer less than or equal to n.

33. A feedback apparatus for semi-persistent scheduling, the apparatus comprising:
a first receiving module, configured to receive at least one semi-persistent scheduling (SPS) activation instruction sent by a network device, wherein the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
the first receiving module being further configured to receive data on an SPS PDSCH corresponding to the at least one SPS configuration;
a feedback module, configured to feed back an HARQ-ACK to the network device according to the HARQ-ACK group corresponding to the at least one SPS configuration.

34. The apparatus according to claim 33, wherein
the first receiving module is further configured to receive one or more pieces of SPS configuration information corresponding to the one or more SPS configurations, wherein each piece of SPS configuration information corresponds to one SPS configuration, and each piece of SPS configuration information comprises group information of the HARQ-ACK group corresponding to the SPS configuration.

35. The apparatus according to claim 33, wherein activated n SPS configurations correspond to a first HARQ-ACK group; the n SPS configurations of the first HARQ-ACK group correspond to a same HARQ-ACK feedback time unit, n is a positive integer;
the first receiving module is further configured to receive data on at least one SPS PDSCH corresponding to the n SPS configurations;
the feedback module is further configured to feed back the HARQ-ACK to the network device within the HARQ-ACK feedback time unit corresponding to the n SPS configurations.

36. The apparatus according to claim 35, wherein:
the first HARQ-ACK group corresponds to 1 bit of feedback information, and n is a positive integer;
the first receiving module is further configured to receive data on at least one SPS PDSCH corresponding to the n SPS configurations;
the feedback module is further configured to feed back the HARQ-ACK to the network device through the 1 bit of feedback information bit of the first HARQ-ACK group corresponding to the n SPS configurations.

37. The apparatus according to claim 36, wherein the apparatus further comprises:
a generating module, configured to generate HARQ-ACK of 1 bit according to a reception situation of an SPS PDSCH on which valid data transmission occurs in n SPS PDSCHs corresponding to the n SPS configurations, wherein n is a positive integer;
or,
the generating module is further configured to generate HARQ-ACK of 1 bit according to a logical OR result of reception situations on n SPS PDSCHs corresponding to the n SPS configurations, wherein n is a positive integer.

38. The apparatus according to claim 35, wherein the first HARQ-ACK group corresponds to n bits of feedback information bit, and n is a positive integer;
the first receiving module is further configured to receive data on at least one SPS PDSCH corresponding to the n SPS configurations;
the feedback module is further configured to feed back the HARQ-ACK to the network device through the n bits of feedback information bit of the first HARQ-ACK group corresponding to the n SPS configurations.

39. The apparatus according to claim 38, wherein the apparatus further comprises:
the generating module is configured to generate HARQ-ACK of n bits with a same value according to a reception situation of an SPS PDSCH on which valid data transmission occurs in n SPS PDSCHs corresponding to the n SPS configurations, wherein n is a positive integer;
or,
the generating module is further configured to generate HARQ-ACK of n bits with a same value according to a logical OR result of reception situations on n SPS PDSCHs corresponding to the n SPS configurations, wherein n is a positive integer.

40. The apparatus according to claim 33, wherein:
activated n SPS configurations correspond to a second HARQ-ACK group; the n SPS configurations of the second HARQ-ACK group correspond to K HARQ-ACK feedback time units, wherein K is a positive integer;
the first receiving module is further configured to receive data on the SPS PDSCH corresponding to the n SPS configurations;
the feedback module is further configured to feed back the HARQ-ACK to the network device within the K HARQ-ACK feedback time units corresponding to the n SPS configurations.

41. The apparatus according to claim 40, wherein each HARQ-ACK feedback time unit corresponds to 1 bit of feedback information, the second HARQ-ACK group corresponds to K bits of feedback information bit in total, and n and K are positive integers;
the first receiving module is further configured to receive data on at least one SPS PDSCH corresponding to the n SPS configurations;
the feedback module is further configured to feed back the HARQ-ACK to the network device through the K bits of feedback information bit of the K HARQ-ACK feedback time units corresponding to the n SPS configurations.

42. The apparatus according to claim 41, wherein the apparatus further comprises:
a generating module, configured to, according to a reception situation of an SPS PDSCH on which valid data transmission occurs in nⱼ SPS PDSCHs of nⱼ SPS configurations corresponding to the j^{th} HARQ-ACK feedback time unit, generate HARQ-ACK of 1 bit corresponding to the j^{th} HARQ-ACK feedback time unit; generate HARQ-ACK of K bits corresponding to the K HARQ-ACK feedback time units, wherein nⱼ is a positive integer less than or equal to n, and j is a positive integer less than or equal to K;
or,
the generating module is further configured to, according to a logical OR result of reception situations on nⱼ SPS PDSCHs of nⱼ SPS configuration corresponding to the j^{th} HARQ-ACK feedback time unit, generate HARQ-ACK of 1 bit corresponding to the j^{th} HARQ-ACK feedback time unit; and generate HARQ-ACK of K bits corresponding to the K HARQ-ACK feedback time units, wherein nⱼ is a positive integer less than or equal to n, and j is a positive integer less than or equal to K.

43. The apparatus according to claim 40, wherein the K^{th} HARQ-ACK feedback time unit corresponds to 1 bit of feedback information bit, the second HARQ-ACK group corresponds to 1 bit of feedback information bit in total, and n and K are positive integer;
the first receiving module is further configured to receive data on at least one SPS PDSCH corresponding to the n SPS configurations;
the feedback module is further configured to feed back the HARQ-ACK to the network device through the 1 bit of feedback information bit of the K^{th} HARQ-ACK feedback time unit corresponding to the n SPS configurations.

44. The apparatus according to claim 43, wherein the apparatus further comprises:
a generating module, configured to generate HARQ-ACK of 1 bit according to a reception situation of an SPS PDSCH on which valid data transmission occurs in n SPS PDSCHs corresponding to the n SPS configurations, wherein n is a positive integer;
or,
the generating module is further configured to generate HARQ-ACK of 1 bit according to a logical OR result of reception situations on n SPS PDSCHs corresponding to the n SPS configurations, wherein n is a positive integer.

45. The apparatus according to claim 40, wherein the j^{th} HARQ-ACK feedback time unit corresponds to nⱼ bits of feedback information, the second HARQ-ACK group corresponds to n bits of feedback information bit in total, and nⱼ is the number of SPS configurations corresponding to the j^{th} HARQ-ACK feedback time unit, wherein n is a positive integer, nⱼ is a positive integer less than or equal to n, and j is a positive integer less than or equal to K;
the first receiving module is further configured to receive data on at least one SPS PDSCH corresponding to the n SPS configurations;
the feedback module is configured to feed back the HARQ-ACK to the network device through the n bits of feedback information bit of the K HARQ-ACK feedback time units corresponding to the n SPS configurations.

46. The apparatus according to claim 45, wherein the apparatus further comprises:
a generating module, configured to, according to a reception situation of an SPS PDSCH on which valid data transmission occurs in nⱼ SPS PDSCHs of nⱼ SPS configurations corresponding to the j^{th} HARQ-ACK feedback time unit, generate HARQ-ACK of nⱼ bits with a same value corresponding to the j^{th} HARQ-ACK feedback time unit; and generate HARQ-ACK of n bits corresponding to K HARQ-ACK feedback time units in total, wherein n and K are positive integers, nⱼ is a positive integer less than or equal to n, and j is a positive integer less than or equal to K;
or,
the generating module is further configured to, according to a logical OR result of reception situations on nⱼ SPS PDSCHs of nⱼ SPS configurations corresponding to the j^{th} HARQ-ACK feedback time unit, generate HARQ-ACK of nⱼ bits with a same value corresponding to the j^{th} HARQ-ACK feedback time unit; and generate HARQ-ACK of n bits corresponding to K HARQ-ACK feedback time units in total, wherein n and K are positive integers, and nⱼ is a positive integer less than or equal to n, and j is a positive integer less than or equal to K.

47. The apparatus according to claim 40, wherein the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, wherein n and K are positive integers, and nₖ is a positive integer less than or equal to n;
the first receiving module is further configured to receive data on at least one SPS PDSCH corresponding to the n SPS configurations;
the feedback module is further configured to feed back the HARQ-ACK to the network device through the nₖ bits of feedback information bit of the K^{th} HARQ-ACK feedback time unit corresponding to the n SPS configurations.

48. The apparatus according to claim 47, wherein the apparatus further comprises:
a generating module, configured to generate HARQ-ACK of nₖ bits with a same value according to a reception situation of an SPS PDSCH on which valid data transmission occurs in n SPS PDSCHs corresponding to the n SPS configurations, wherein n is a positive integer, and nₖ is a positive integer less than or equal to n;
or,
the generating module is further configured to generate HARQ-ACK of nₖ bits with a same value according to a logical OR result of reception situations on n SPS PDSCHs corresponding to the n SPS configurations, wherein n is a positive integer, and nₖ is a positive integer less than or equal to n.

49. A feedback apparatus for semi-persistent scheduling, the apparatus comprising:
a sending module, configured to send at least one semi-persistent scheduling (SPS) activation instruction to a terminal device, wherein the SPS activation instruction is used for activating at least one SPS configuration in one or more SPS configurations configured for the terminal device; and each SPS configuration in the one or more SPS configurations corresponds to one hybrid automatic repeat request-acknowledgement (HARQ-ACK) group;
the sending module being further configured to send data to the terminal device on an SPS PDSCH corresponding to the at least one SPS configuration;
a second receiving module, further configured to receive an HARQ-ACK fed back by the terminal device, wherein the HARQ-ACK is fed back by the terminal device according to the HARQ-ACK group corresponding to the at least one SPS configuration.

50. The apparatus according to claim 49, wherein:
the sending module is further configured to send one or more pieces of SPS configuration information corresponding to the one or more SPS configurations, wherein each piece of SPS configuration information corresponds to one SPS configuration, and each piece of SPS configuration information comprises group information of the HARQ-ACK group corresponding to the SPS configuration.

51. The apparatus according to claim 49, wherein activated n SPS configurations correspond to a first HARQ-ACK group; the n SPS configurations of the first HARQ-ACK group correspond to a same HARQ-ACK feedback time unit, and n is a positive integer;
the HARQ-ACK is fed back by the terminal device to the network device within the HARQ-ACK feedback time unit corresponding to the n SPS configurations after receiving data on at least one SPS PDSCH corresponding to the n SPS configurations.

52. The apparatus according to claim 51, wherein the first HARQ-ACK group corresponds to 1 bit of feedback information bit, and n is a positive integer;
the HARQ-ACK is fed back by the terminal device to the network device through the 1 bit of feedback information bit of the first HARQ-ACK group corresponding to the n SPS configurations after receiving data on at least one SPS PDSCH corresponding to the n SPS configurations.

53. The apparatus according to claim 52, wherein:
the HARQ-ACK is HARQ-ACK of 1 bit generated by the terminal device according to a reception situation of an SPS PDSCH on which valid data transmission occurs in n SPS PDSCHs corresponding to the n SPS configurations, wherein n is a positive integer;
or,
the HARQ-ACK is HARQ-ACK of 1 bit generated by the terminal device according to a logical OR result of reception situations on n SPS PDSCHs corresponding to the n SPS configurations, wherein n is a positive integer.

54. The apparatus according to claim 51, wherein the first HARQ-ACK group corresponds to n bits of feedback information bit, and n is a positive integer;
the HARQ-ACK is fed back by the terminal device to the network device through n bits of feedback information bit of the first HARQ-ACK group corresponding to the n SPS configurations bit after receiving data on at least one SPS PDSCH corresponding to the n SPS configurations.

55. The apparatus according to claim 54, wherein:
the HARQ-ACK is HARQ-ACK of n bits with a same value generated by the terminal device according to a reception situation of an SPS PDSCH on which valid data transmission occurs in n SPS PDSCHs corresponding to the n SPS configurations, wherein n is positive integer;
or,
the HARQ-ACK is HARQ-ACK of n bits with a same value generated by the terminal device according to a logical OR result of reception situations on n SPS PDSCHs corresponding to the n SPS configurations, wherein n is a positive integer.

56. The apparatus according to claim 49, wherein:
activated n SPS configurations correspond to a second HARQ-ACK group; and the n SPS configurations of the second HARQ-ACK group correspond to K HARQ-ACK feedback time units, wherein K is a positive integer;
the HARQ-ACK is fed back by the terminal device to the network device within the K HARQ-ACK feedback time units corresponding to the n SPS configurations after receiving data on the SPS PDSCH corresponding to the n SPS configurations.

57. The apparatus according to claim 56, wherein each HARQ-ACK feedback time unit corresponds to 1 bit of feedback information, the second HARQ-ACK group corresponds to K bits of feedback information in total, and n and K are positive integers;
the HARQ-ACK is fed back by the terminal device to the network device through the K bits of feedback information bit of the K HARQ-ACK feedback time units corresponding to the n SPS configurations after receiving data on at least one SPS PDSCH corresponding to the n SPS configurations.

58. The apparatus according to claim 57, wherein:
the HARQ-ACK is HARQ-ACK of 1 bit corresponding to the j^{th} HARQ-ACK feedback time unit generated by the terminal device according to a reception situation of an SPS PDSCH on which valid data transmission occurs in nⱼ SPS PDSCHs of nⱼ SPS configurations corresponding to the j^{th} HARQ-ACK feedback time unit; HARQ-ACK of K bits corresponding to K HARQ-ACK feedback time units at generated in total, nⱼ is a positive integer less than or equal to n, and j is a positive integer less than or equal to K;
or,
the HARQ-ACK is HARQ-ACK of 1 bit corresponding to the j^{th} HARQ-ACK feedback time unit generated by the terminal device according to a logical OR result of reception situations on nⱼ SPS PDSCHs of nⱼ SPS configurations corresponding to the j^{th} HARQ-ACK feedback time unit; HARQ-ACK of K bits corresponding to K HARQ-ACK feedback time units are generated in total, nⱼ is a positive integer less than or equal to n, and j is a positive integer less than or equal to K.

59. The apparatus according to claim 56, wherein the K^{th} HARQ-ACK feedback time unit corresponds to 1 bit of feedback information bit, the second HARQ-ACK group corresponds to 1 bit of feedback information in total, and n and K are positive integer;
the HARQ-ACK is fed back by the terminal device to the network device through 1 bit of feedback information bit of the K^{th} HARQ-ACK feedback time unit corresponding to the n SPS configurations after receiving data on at least one SPS PDSCH corresponding to the n SPS configurations.

60. The apparatus according to claim 59, wherein:
the HARQ-ACK is HARQ-ACK of 1 bit generated by the terminal device according to a reception situation of an SPS PDSCH on which valid data transmission occurs in n SPS PDSCHs corresponding to the n SPS configurations, wherein n is a positive integer;
or,
the HARQ-ACK is HARQ-ACK of 1 bit generated by the terminal device according to a logical OR result of reception situations on n SPS PDSCHs corresponding to the n SPS configurations, wherein n is a positive integer.

61. The apparatus according to claim 56, wherein the j^{th} HARQ-ACK feedback time unit corresponds to nⱼ bits of feedback information bit, the second HARQ-ACK group corresponds to n bits of feedback information bit in total, and nⱼ is the number of SPS configurations corresponding to the j^{th} HARQ-ACK feedback time unit, wherein n is a positive integer, nⱼ is a positive integer less than or equal to n, and j is a positive integer less than or equal to K;
the HARQ-ACK is fed back by the terminal device to the network device through n bits of feedback information bit of K HARQ-ACK feedback time units corresponding to the n SPS configurations after receiving data on at least one SPS PDSCH corresponding to the n SPS configurations.

62. The apparatus according to claim 61, wherein:
the HARQ-ACK is HARQ-ACK of nⱼ bits with a same value corresponding to the j^{th} HARQ-ACK feedback time unit generated by the terminal device according to a receiving situation of an SPS PDSCH on which valid data transmission occurs in nⱼ SPS PDSCHs of nⱼ SPS configurations corresponding to the j^{th} HARQ-ACK feedback time unit; HARQ-ACK of n bits corresponding to K HARQ-ACK feedback time units in total are generated in total, n and K are positive integers, nⱼ is a positive integer less than or equal to n, and j is a positive integer less than or equal to K;
or,
the HARQ-ACK is HARQ-ACK of nⱼ bits with a same value corresponding to the j^{th} HARQ-ACK feedback time unit generated by the terminal according to a logical OR result of reception situations on nⱼ SPS PDSCHs of nⱼ SPS configurations corresponding to the j^{th} HARQ-ACK feedback time unit; HARQ-ACK of n bits corresponding to K HARQ-ACK feedback time units in total are generated in total, n and K are positive integers, nⱼ is a positive integer less than or equal to n, and j is a positive integer less than or equal to K.

63. The apparatus according to claim 56, wherein the K^{th} HARQ-ACK feedback time unit corresponds to nₖ bits of feedback information bit, the second HARQ-ACK group corresponds to nₖ bits of feedback information bit in total, and nₖ is the number of SPS configurations corresponding to the K^{th} HARQ-ACK feedback time unit, wherein n and K are positive integers, and nₖ is a positive integer less than or equal to n;
the HARQ-ACK is fed back by the terminal device to the network device through nₖ bits of feedback information bit of the K^{th} HARQ-ACK feedback time unit corresponding to the n SPS configurations after receiving data on at least one SPS PDSCH corresponding to the n SPS configurations.

64. The apparatus according to claim 63, wherein:
the HARQ-ACK is HARQ-ACK of nₖ bits with a same value generated by the terminal device according to a reception situation of an SPS PDSCH on which valid data transmission occurs in n SPS PDSCHs corresponding to the n SPS configurations, n is a positive integer, and nₖ is a positive integer less than or equal to n;
or,
the HARQ-ACK is HARQ-ACK of nₖ bits with a same value generated by the terminal device according to a logical OR result of reception situations on n SPS PDSCHs corresponding to the n SPS configurations, n is a positive integer, and nₖ is a positive integer less than or equal to n.

65. A terminal device, the terminal device comprising:
a processor;
a transceiver connected to the processor;
a memory for storing executable instructions of the processor;
wherein the processor is configured to load and execute the executable instructions to implement the feedback method for semi-persistent scheduling according to any one of claims 1 to 16.

66. A network device, the network device comprising:
a processor;
a transceiver connected to the processor;
a memory for storing executable instructions of the processor;
wherein the processor is configured to load and execute the executable instructions to implement the feedback method for semi-persistent scheduling according to any one of claims 17 to 32.

67. A computer-readable storage medium, wherein executable instructions are stored in the readable storage medium, and the executable instructions are loaded and executed by a processor to implement the feedback method for semi-persistent scheduling according to any one of claims 1 to 32.
